(19) Europäisches Patentamt
European Patent Office
Office européen des brevets

(11) **EP 4 751 984 A1**

(12) **EUROPEAN PATENT APPLICATION**

(43) Date of publication:
03.06.2026 Bulletin 2026/23

(21) Application number: 24216689.0

(22) Date of filing: 29.11.2024

(51) International Patent Classification (IPC):
*B60L 53/12* (2019.01)   *B60L 53/122* (2019.01)
*B60L 53/38* (2019.01)   *B60L 53/39* (2019.01)
*B60L 53/66* (2019.01)   *B60L 55/00* (2019.01)
*H02J 50/12* (2016.01)   *H02J 50/80* (2016.01)
*H02J 50/90* (2016.01)   *B60L 53/62* (2019.01)

(52) Cooperative Patent Classification (CPC):
B60L 53/38; B60L 53/12; B60L 53/122;
B60L 53/39; B60L 53/62; B60L 53/66; B60L 55/00;
H02J 3/322; H02J 50/10; H02J 50/12; H02J 50/80;
H02J 50/90; H02J 2105/37

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: WiTricity AI Tech, LLC
Stuart, FL 34997 (US)

(72) Inventors:
• MARKMANN, Sergej
  Midway, 31320 (US)
• ATASOY, Oguz
  Midway, 31320 (US)

(74) Representative: HG Law International LLP
26-28 Bedford Row
London WC1R 4HE (GB)

(54) **SYSTEMS AND METHODS FOR OPERATING A WIRELESS POWER TRANSFER SYSTEM**

(57) Systems and methods are described herein for reducing communication latency in a wireless power transfer system. A method of switching the wireless power transfer direction between wireless power transfer coils of a vehicle unit and a ground unit comprises: receiving at the ground unit, one or more vehicle unit coil parameters, the one or more vehicle unit coil parameters including a vehicle unit coil position relative to the ground unit coil; determining, based on the vehicle unit coil position relative to the ground unit coil position, a coupling factor between the vehicle unit coil and the ground unit coil; determining, based on the coupling factor, one or more power transfer direction swap parameters; receiving at the ground unit, instructions to perform a power transfer direction swap; and performing, based on the determined one or more power transfer direction swap parameters, the power transfer direction swap.

EP 4 751 984 A1

**Description**

TECHNICAL FIELD

This application relates to wireless power transfer systems and methods, and in particular, but not exclusively, to operation of wireless power transfer systems to provide wireless power transfer and communication between electric vehicle batteries and wireless electric vehicle charging stations.

BACKGROUND

The increasing prevalence of electric vehicles (EVs) necessitates efficient and interoperable charging solutions. The ISO 15118 series of standards, specifically ISO 15118-2 and the recent (as of the filing date of this disclosure) ISO 15118-20, address the need for standardized communication between EVs and charging infrastructure. At least in part, these standards look to address interoperability issues arising from the diversity of EV manufacturers, charging station providers, and communication protocols.

ISO 15118-2 discusses communication between vehicles and charging equipment, for example defining messaging between EVs and charging stations over a wired connection. This standard introduced concepts such as Plug & Charge, which involved authentication and billing processes, and Smart Charging, which optimizes charging based on grid demand and EV requirements.

ISO 15118-2 primarily focused on plug-in systems and did not fully address the needs of wireless power transfer (WPT) systems. This limitation necessitated further development to create a more comprehensive standard that could cater to both plug-in and wireless charging technologies.

ISO 15118-20 expanded upon the foundation of ISO 15118-2, aiming to improve applicability to both plug-in and WPT systems. ISO 15118-20 included provisions for high power charging, bidirectional power transfer, and enhanced cybersecurity measures, ensuring that it meets the evolving needs of the EV ecosystem.

Both ISO 15118-2 and ISO 15118-20 describe the implementation and realization of various layers of the Open Systems Interconnection (OSI) model, used for ensuring standardized communication protocols. These standards provided detailed specifications for the Network, Transport, Session, Presentation, and Application layers, attempting to set a comprehensive communication framework for EVs and charging infrastructure.

Despite the coverage of the higher OSI layers, ISO 15118-2 and ISO 15118-20 do not specify the Physical and Data Link layers for WPT systems, which would be key for the transmission of data over the communication medium.

These current standards assume that a vehicle unit of a WPT system is capable of switching between, for example, grid-to-vehicle (G2V) and vehicle-to-grid (V2G) power transfer modes, within specified timings as required by the standard. Contrary to plug-in electrical vehicle charging solutions, such temporal constraints can present obstacles for current WPT systems. Moreover, such standards do not address the roadblocks currently presented to various use-cases of WPT systems, such as for using a vehicle battery as an uninterrupted power supply (UPS) for a home in a V2H application, which in cases where a WPT system is operating in a G2V mode, would require a reversal of power transfer direction on a scale of tens of milliseconds.

Reversing the power transfer direction on such a time scale upon a request for switching between a G2V power transfer direction and a V2G or vehicle-to-home (V2H) power transfer direction is a non-trivial task for a WPT system for a number of reasons, including signal latency and electrical energy management within current standard-compliant techniques.

It is therefore desirable to provide quicker solutions for implementing power transfer direction changes in WPT systems, including on the time scales required for using an electric vehicle battery as an uninterrupted power supply, while remaining robust to potential issues associated with a changing of power transfer direction on such time scales.

SUMMARY

Current approaches, such as those compliant with the SAE J2954 WPT standard, typically make use of Wi-Fi as a communication medium. Use of Wi-Fi can present some limitations such as signal latency and signal interference associated with operating on the crowded frequency bands 2.4 GHz and 5 GHz. By way of example, interference on such bands can cause packet collisions and retransmission, and compliance with the 802.11 standard implies inclusion of mechanisms for error checking, acknowledgment, and retransmission. The overhead associated with these protocols, while ensuring data integrity, can be at the cost of increased latency.

Latency can in some cases be 250 ms or higher, and can reach up to several seconds in the worst cases. For wireless power transfer applications, such as those implementing V2G capabilities for use of a vehicle battery as a UPS, reversal of power transfer direction is desirably realized on a tens-of-milliseconds timescale. The latency and interference associated with Wi-Fi therefore presents an obstacle to wireless power transfer applications desiring to implement power transfer direction reversal. The presence of other operational Wi-Fi modules in and around a WPT system during operation can pose additional risk of signal interference, which can in some cases worsen latency issues.

Additionally, in inductive wireless power transfer systems, the action of reversing a power transfer direction at the required timescales may in some cases lead to spikes, artefacts or transient responses such as current or voltage overshoots, due to the remaining energy stored within the resonator tank of an inductor/capacitor resonator circuit used for wireless power transfer. It may therefore be desirable to optimize power transfer parameters used in implementing the power transfer direction reversal, either before or during the reversal, for example to minimize an associated transient response.

Managing these challenges to provide a wireless power transfer method suitable for using an electric vehicle battery as a UPS for, for example V2H applications, requires robust strategies which can account for difFiculties associated with the required timescale and the circuit behaviors at such timescales.

The present disclosure therefore provides systems and methods for enabling wireless power transfer direction reversal such that an electric vehicle battery may serve as a UPS, for example by providing fast access to required parameters for performing the power transfer direction reversal, and in a manner that conforms with the required timescales and accounts for latency and interference challenges. In particular, in one aspect the present systems and methods make use of positioning information for determining a coupling factor between a vehicle unit coil and a ground unit coil of a wireless power transfer system, the positioning information and coupling factor suitable for determining power transfer direction reversal parameters required for performing a power transfer direction reversal within the required timescales, for example while minimizing transient responses from resonator circuitry of the vehicle unit coil and the ground unit coil. In a further aspect, the present systems and methods make use of a direct bidirectional communication channel, which may, for example, be implemented in addition to existing (for example Wi-Fi) communication channels, suitable for communication of the required parameters at the required timescales for performing the power transfer direction reversal.

In accordance with one aspect of the present disclosure therefore, there is provided a method of switching a direction of wireless power transfer between a wireless power transfer coil of a vehicle unit and a wireless power transfer coil of a ground unit, the method comprising: receiving at the ground unit, using control circuitry, one or more vehicle unit coil parameters, the one or more vehicle unit coil parameters including a vehicle unit coil position relative to the ground unit coil; determining, using control circuitry, based on the vehicle unit coil position relative to the ground unit coil position, a coupling factor between the vehicle unit coil and the ground unit coil; determining, using control circuitry, based on the coupling factor, one or more power transfer direction swap parameters; receiving at the ground unit, using control circuitry, instructions to perform a power transfer direction swap; and performing, using control circuitry, based on the determined one or more power transfer direction swap parameters, the power transfer direction swap.

The term "wireless power transfer coil" will be understood herein to mean any suitable coil designed to engage with another coil for the purpose of transferring power between the coils without the need for physical connections. The coils will be understood to function through magnetic induction or resonant inductive coupling, wherein alternating current in a primary such coil generates a magnetic field that induces a current in a secondary such coil, enabling wireless power transmission. Such coils are suitable for integration into systems like wireless electric vehicle charging stations, wherein power is transferred across an air gap between a ground-side coil and a vehicle-side coil.

It will be understood herein that the term "power transfer" in the context of the present disclosure refers to any suitable transfer of power from or to an electric vehicle battery, and may include transfer from the electric vehicle battery to an electrical grid, from an electrical grid to the electric vehicle battery, or from the electric vehicle battery direct to any suitable power consumer, such as a home. Such a process may encompasses any one or more of the components and stages involved in the power transfer, for example the conversion between alternating current (AC) of the electrical grid to direct current (DC) of the battery, the regulation of voltage and the current to ensure safe and efficient transfer, and the interaction between electrical connections, whether physical or wireless, between a power transfer system and the electric vehicle, along with any communication channel operating between the power transfer system and the electric vehicle. A power transfer system in the context of the present disclosure is therefore any system suitable for facilitating such aspects of the power transfer process, and may be configured for either a physical or wireless connection with the electric vehicle, and may be further configured for wired or wireless communication with the electrical vehicle.

The terms "vehicle unit" and "ground unit" will be understood herein to mean component parts of a wireless power transfer system for charging electric vehicle batteries, the vehicle unit being comprised as part of, or within, a vehicle assembly of an electric vehicle, and the ground unit being comprised within a ground assembly of the wireless power transfer system. The ground unit will be understood to be connected to an electrical grid and configured to transfer power between the grid, and optionally any other suitable source or drain such as a home, and the electric vehicle battery.

The term "receiving, at the ground unit" will be understood herein to mean receiving at any suitable receiver of the ground unit and is intended to encompass any type of receiver or receiving mechanism within the ground unit that is capable of accepting signals and/or power for further processing or transmission.

The term "using control circuitry" will be understood herein to apply broadly to any suitable control circuitry. For example, control circuitry may comprise control circuitry of any processing circuitry or computing device of the system, or control circuitry of a remote server, working either alone or in any combination. Steps performed used control circuitry may be understood as being performed by the same or different such control circuitry in any suitable sequence or combination.

The term "vehicle unit coil parameters" will be understood herein to mean any suitable parameters of the vehicle unit coil, provided that the parameters include at least the vehicle unit coil position relative to the ground unit coil. The vehicle unit coil parameters may, for example, include additional known parameters associated with the vehicle unit coil, for example known physical or dimensional parameters of the vehicle unit coil. Such parameters may, for example, include a vehicle unit coil inductance, a vehicle unit coil material, a number of turns of the vehicle unit coil, a radius of the vehicle unit coil, a current through the vehicle unit coil, a voltage induced in the vehicle unit coil. Such parameters may be suitable, in some examples, for use by control circuitry for determining the coupling factor.

Receiving instructions to perform a power transfer direction swap will be understood herein to mean any suitable receiving of instructions, whether by way of a wired or wireless communication, and from any suitable source. The instructions may be received and processed prior to a consequential actuation of the power transfer direction swap, or the instructions may in some examples be in the form of a signal configured to directly actuate the power transfer direction swap. In some examples, the instructions may be transmitted locally within the ground unit for receipt and performing of the power transfer direction swap, or may be received from a remote transmission source, such as a remote sensing apparatus or a remote server. The instructions may be received at least at the ground unit, and may be communicated from the ground unit to the vehicle. The communication from the ground unit to the vehicle may be by any suitable communication channel, and in some examples is performed by way of a direct communication channel such as those described herein. In some examples, the ground unit (and optionally the vehicle or corresponding vehicle unit) may be configured to follow a predefined protocol for performing the power transfer direction swap. In some examples, the ground unit and the vehicle, or vehicle unit thereof, may be configured to transmit and receive corresponding instructions simultaneously by way of distinct communication channels for transmission and receipt, for example using a communication channel as described herein. Using such communication may reduce the likelihood of a miscommunication from or to the ground unit or the vehicle.

It will be understood herein that the power transfer direction swap can be performed in any suitable manner based on the determined one or more power transfer direction swap parameters. Any suitable power direction swap parameters may be used as described herein, for example a property of one or more control signals such as ground unit coil current control signals or vehicle unit coil current control signals as described herein. For example a pulse width, a duty cycle, a timing or a signal time delay of one or more such signals, may be used to adjust a property of the current at a power transfer coil circuit of the ground unit or vehicle unit, as part of the power transfer direction swap. Any further suitable power transfer direction swap parameters may be used as described herein, for example rectifier duty cycle, rectifier delay, inverter duty cycle, inverter delay, ground unit voltage, vehicle unit voltage, load voltage, battery voltage, coupling factor, inductance of the ground unit and the vehicle unit power transfer coils, a vehicle unit position relative to the ground unit, ground unit type, vehicle unit type, a target power or a target current, a power or current ramp, timing for shorting one or more circuit components of the vehicle unit or the ground unit (for example switches), and a time duration (for example a target time duration) before normal operation of the power transfer system is reached. For example, the power transfer direction swap parameters, such as based on the determined coupling factor, may be used to inform one or more steps of performing the power transfer direction swap. As such the power transfer direction swap can be driven by a known coupling factor, such that the manner of performing the power transfer direction swap may be optimized by way of the power transfer direction swap parameters for performance at the required timescales while minimizing any transient response or artefacts associated with performing the power transfer direction swap at the required timescales.

It will be appreciated that any suitable steps of the presently described method may be initiated following any suitable trigger, such as a loss of power or current at either the ground unit or the vehicle unit. For example, in cases wherein the method or system may be intended to provide an uninterrupted power supply, any loss of power or current, or any application of a load or drain to the power transfer system, may trigger one or more steps of the present method, such as to initiate the power transfer direction swap. In some examples, any steps of the present method may be configured to be triggered in response to a suitable command or control signal, for example from the ground unit or the vehicle unit. Such command or control signal may, for example, be based on a request from an aggregator or operator of an electrical grid, or a user of the wireless power transfer system.

In some examples, the one or more vehicle unit coil parameters further comprises one or more selected from: a vehicle unit type; a vehicle unit coil type; a vehicle unit coil inductance; a vehicle unit coil quality factor; a vehicle unit coil physical characteristic; a number of vehicle unit coil turns; a vehicle unit coil core permeability; a vehicle unit coil cross-sectional area; a vehicle unit coil length; a vehicle unit coil radius. Any suitable coil parameters will be appreciated. The terms "vehicle unit type" and "vehicle unit coil type" will be understood to mean any suitable identifier of the vehicle unit or the vehicle unit coil, for example a manufacturer, model number or serial number, and may include a vehicle manufacturer or a vehicle model number or serial number. In some examples, the ground unit may, following receipt the vehicle unit coil parameters, for example the vehicle unit type or the vehicle unit coil type, access one or more further vehicle unit coil parameters associated with the received vehicle unit coil parameters, said accessed vehicle unit coil parameters accessed from any suitable local or remote storage. In some such examples, the one or more power transfer direction swap parameters may be determined using the accessed vehicle unit coil parameters.

In some examples wherein the vehicle unit coil parameters comprise a vehicle unit type or a vehicle unit coil type, determining the coupling factor may comprise accessing or receiving the coupling factor based on the vehicle unit type or the vehicle coil type, the vehicle unit position relative to the ground unit coil, and a ground unit type or a ground unit coil type of the ground unit. For example, the ground unit may be configured to access or receive, from any suitable local or remote storage, a database, look-up table or any suitable mapping of the vehicle unit type (or the vehicle unit coil type) and the ground unit type (or ground unit coil type) at the vehicle unit coil position relative to the ground unit coil. Such a database, look-up table or mapping may be predetermined for known ground unit types (or ground unit coil types) and vehicle unit types (or vehicle unit coil types), for example at vehicle unit coil positions relevant for wireless power transfer between the ground unit and the vehicle unit, for example positions within a predefined threshold distance range or parking region as described herein.

In some examples, such as those in which determining the coupling factor comprises calculating the coupling factor, the determining may further comprise: accessing one or more ground unit coil parameters and performing the power transfer direction swap using the ground unit coil parameters. The one or more ground unit coil parameters may in some examples, be any suitable parameters for determining, calculating, estimating or inferring the coupling factor, either directly or by way any suitable intermediary parameter, such as a mutual inductance between the vehicle unit coil and the ground unit coil.

In some examples, the one or more ground unit coil parameters may define a ground unit type or a ground unit coil type. In some such examples, the ground unit type or ground unit coil type may be used to access or receive the coupling factor as described herein. In some examples, the one or more ground unit coil parameters may further comprise one or more selected from: a ground unit coil inductance; a ground unit coil quality factor; a ground unit coil physical characteristic; a number of ground unit coil turns; a ground unit coil core permeability; a ground unit coil cross-sectional area; a ground unit coil length; a ground unit coil radius.

In some examples, the one or more ground unit coil parameters may be known or predetermined. In some examples, a correlation or mapping between a mutual inductance and a vehicle unit coil position relative to the ground unit coil may be known or predetermined. In some examples, the predetermined correlation or mapping may comprise, for each of a plurality of vehicle unit coil positions relative to the ground unit coil, a corresponding mutual inductance. In some such examples, determining the coupling factor may comprise, accessing the predetermined or known correlation or mapping and, based on the vehicle unit coil position relative to the ground unit coil, using the predetermined or known correlation or mapping to determine one or more mutual inductances. The correlation or mapping may in some examples be referred to as $M(x,y,z)$, wherein $M$ indicates the mutual inductance and $(x,y,z)$ refers to a three-dimensional coordinate indicating the vehicle unit position, for example relative to the ground unit. It will be appreciated that the position information may additionally comprise any suitable absolute or relative rotational or orientation metric or indicator. In some such examples, determining the coupling factor may be based on the determined one or more mutual inductances. For example, for a known ground unit coil type, for example from a known manufacturer, a prior determined mapping may be provided between relative vehicle coil positions to the ground unit coil and corresponding mutual inductances associated with the ground unit coil type. Such a predetermined or known correlation or mapping may be provided for each of a plurality of ground unit coil types, for each of a plurality of vehicle unit coil types, or any suitable combination thereof. The correlation or mapping may be selected from a plurality of correlations or mappings based on the ground unit coil parameters, the vehicle unit coil parameters, or both, which may indicate or comprise any suitable identification information characterizing the vehicle unit coil or the ground unit coil, such as a vehicle unit coil type or the ground unit coil type. The correlation or mapping may be determined by any suitable method, for example by way of simulation or pretesting.

The term "vehicle unit coil position relative to the ground unit coil position" will be understood herein to mean any suitable data defining a position of the vehicle unit coil or any component thereof, such as a geometric coil center-point or a magnetic center-point of the vehicle unit (or the vehicle unit coil) and a magnetic center point of the ground unit (or the ground unit coil). In some examples it may be appreciated that the geometric center-point and the magnetic center-point of the vehicle unit coil and the ground unit coil may be proximate one another, and may in some examples be identical. The vehicle unit coil position and the ground unit coil position may, for example, be understood as having an x-component and a y-component on a plane parallel with the ground, and a z-component on a plane perpendicular with the ground. In such examples, the coil position may be defined by an x, y, z-coordinate system or may take any other suitable form. In some examples, the position may be defined as a difference between the x, y, z-coordinate position of the vehicle unit coil and an x, y, z-coordinate position of the ground unit coil, and may thereby represent a distance between the vehicle unit coil and the ground unit coil. In some examples therefore, determining the coupling factor may further comprise: calculating, based on the vehicle unit coil position and the ground unit coil position, a relative position of the vehicle unit coil and the ground unit coil, the relative positions each comprising an x-component, a y-component, and a z-component. In some examples, vehicle unit coil position and the ground unit coil position may, for example, be understood as indicating a rotation or an orientation of the vehicle unit or the vehicle unit coil, and may for example indicate an absolute rotation or an orientation of the vehicle unit or vehicle unit coil, or relative to the ground unit or the ground unit coil. In some examples, therefore the relative positions may each further comprise or indicate any suitable angular rotation of the vehicle unit or the vehicle unit coil, for example on one or more axes of the vehicle unit or the vehicle unit coil.

In some examples, determining the coupling factor further comprises: determining, based on the relative position of the vehicle unit coil and the ground unit coil, a distance between the vehicle unit coil and the ground unit coil, the distance having a Z component.

The term "coupling factor" will be understood herein as referring to, the measure of how effectively energy is transferred between the vehicle unit coil and the ground unit coil in a wireless power transfer system. In particular, the coupling factor will be understood to be a dimensionless parameter which quantifies a degree of magnetic coupling between the vehicle unit coil and the ground unit coil, with a value ranging between 0 (indicating no coupling) and 1 (indicating perfect coupling). The coupling factor is intended for determining the efficiency and performance of the wireless power transfer system, and may also be referred to as "k" or the "coupling coefficient". The term "determining the coupling factor" will be understood herein to mean any suitable manner of obtaining the coupling factor. In some examples, the one or more vehicle unit coil parameters includes a vehicle unit coil inductance, and wherein determining the coupling factor further comprises: accessing a ground unit coil inductance; and calculating the coupling factor based on the mutual inductance, the vehicle unit coil inductance and the ground unit coil inductance. In some examples therefore, the coupling factor may be calculated by the control circuitry, for example in accordance with the following formula:

$$k = \frac{M}{\sqrt{L_{GA}\, L_{VA}}}$$

where k is the coupling factor, M is the mutual inductance between the vehicle unit coil and the ground unit coil, and $L_{GA}$ and $L_{VA}$ are the inductances of the ground unit coil and the vehicle unit coil respectively.

In some examples, the inductances of the ground unit coil and the vehicle unit coil may be known, and in such examples the respective inductances may be accessible by the control circuitry, for example via a memory on which the inductances are stored. The memory may be comprised within the vehicle, the ground unit, or both, and in some examples may be communicated between the vehicle and the ground unit via any suitable communication system, for example a communication system as disclosed herein. In some examples, a vehicle assembly of the vehicle may comprise a memory storing the vehicle unit coil inductance, or may comprise one or more vehicle unit coil parameters from which the vehicle unit coil inductance may be calculated. In such examples, determining the coupling factor may comprise receiving, using control circuitry, for example by way of any suitable communication system, the vehicle unit coil inductance or the associated vehicle unit coil parameters. Determining the coupling factor may further comprise calculating the vehicle unit coil inductance from the received vehicle unit coil parameters. In some examples, a ground assembly comprising the ground unit may comprise a memory storing the ground unit coil inductance, or may comprise one or more ground unit coil parameters from which the ground unit coil inductance may be calculated. In such examples, determining the coupling factor may comprise accessing or receiving, using control circuitry, for example via the memory or by way of any suitable communication system, the ground unit coil inductance or the associated ground unit coil parameters. Determining the coupling factor may further comprise calculating the ground unit coil inductance from the accessed or received ground unit coil parameters.

In some examples therefore, determining the coupling factor may further comprise: determining, based on the relative position of the vehicle unit coil and the ground unit coil, or the distance between the vehicle unit coil and the ground unit coil, a mutual inductance of the vehicle unit coil and the ground unit coil. Determining the coupling factor may therefore, in some examples, comprise obtaining, determining, calculating or measuring the mutual inductance (M) between the vehicle unit coil and the ground unit coil, using any suitable method. For example, the mutual inductance may be calculated by passing a known AC current through one of the vehicle unit coil or the ground unit coil and measuring the induced voltage in the other of the vehicle unit coil or the ground unit coil, the mutual inductance calculated for example using the following formula:

$$M = \frac{V_{VA}}{\omega I_{GA}}$$

where M is the mutual inductance between the vehicle unit coil and the ground unit coil, $\omega$ is the angular frequency of the known AC current passed through the ground unit coil ($I_{GA}$), and $V_{VA}$ is the measured voltage induced in the vehicle unit coil. In some examples, a measuring of the mutual inductance may be performed prior to determining the coupling factor. In some examples, the mutual inductance (M) may be estimated or inferred using the relative position, in combination with known or measured vehicle unit coil parameters and known or measured ground unit coil parameters. Any suitable method of accessing, obtaining, determining or calculating the mutual inductance will be appreciated, for example using any suitable physical parameters of the coils, such as in cases of complex or non-standard coil geometry.

It will be appreciated that in some examples, the coupling factor is obtained or accessed from, for example, a database or a look-up table. In such examples, the database or look-up table may comprise a predetermined mapping of the relative position of the vehicle unit coil and the ground unit coil to a corresponding coupling factor. In such examples determining the coupling factor based on the vehicle unit coil position relative to the ground unit coil position may comprise determining, from the relative position information, a corresponding mapped coupling factor from the database or look-up table. In some examples, the predetermined mapping may be determined, calculated, measured, obtained or received in any suitable manner, for example during a calibration (such as factory calibration) of the ground unit, the vehicle unit, or both. In some examples, the predetermined mapping may be determined, calculated, measured, obtained or received following, or during, use of the wireless power transfer system, such as following or during an engagement between the vehicle unit and the ground unit for the purpose of performing power transfer. As such, the predetermined mapping may be obtained, updated or optimized incrementally or gradually during use of the wireless power transfer system, for example as a result of a closed loop control, and once a predetermined mapping is identified for a given position, it may be stored such as at the database or look-up table. In some examples, the predetermined mapping may be predetermined, such as using one or more computer simulations, and stored in the database or look-up table. It will be appreciated that the predetermined mapping may comprise a reduced resolution compared to real three-dimensional space, but may provide a suitably fast and sufficient mode of determining, for a given relative position of the vehicle unit coil and the ground unit coil, a coupling factor and, or which can provide, power transfer direction swap parameters (such as a target power, a target current, or one or more switch timing control signals) suitable for performing a power transfer direction swap on the required timescales while minimising associated electrical artifacts. It will be appreciated that the resolution, or the individual mappings, may be optimised over time, such as during use of the wireless power transfer system as described. The predetermined mapping may in some examples be the same as, be part of, or be based on, a predetermined correlation or mapping between a mutual inductance and a vehicle unit coil position relative to the ground unit coil described herein.

In some examples, the vehicle may move between the steps of receiving the one or more vehicle unit coil parameters and receiving the instructions to perform the power transfer direction swap. Such a movement may lead to any prior determined coupling factor not being optimal for determining power transfer direction swap parameters for the new location. Use of the sub-optimally determined power transfer direction swap parameters for performing a power transfer direction swap at the new location may therefore risk sub-optimal transient response or artefacts occurring during the direction swap, for example current or voltage overshoots resulting from energy stored in the resonator tank of the vehicle unit coil or the ground unit coil. As such, in some examples the method may further comprise: detecting that the vehicle unit coil position has changed; calculating, in response to the detection, an updated vehicle unit coil position; and determining, based on the updated vehicle unit coil position and the ground unit coil position, an updated coupling factor between the vehicle unit coil and the ground unit coil; wherein calculating the one or more power transfer direction swap parameters is based on the updated coupling factor. The updated coupling factor may be determined in any suitable manner such as that discussed herein.

Unintended transient responses and artefacts may be more likely to occur during a power transfer direction swap on time scales required for making use of a vehicle battery as an uninterrupted power supply (UPS). Therefore, the power transfer direction swap parameters may, in some embodiments, target reducing the likelihood and severity of such transient responses and artefacts. The power transfer direction swap parameters may therefore be selected in accordance with a particular manner in which the likelihood and severity reduction of the transient response and artefacts is performed. For example, unintended transient responses and artefacts may arise due to an amount of energy stored in a resonant tank of the vehicle unit coil or the ground unit coil at the time instance at which the power transfer direction swap is performed. As such, in some examples, performing the power transfer direction swap may comprise: reducing at least a portion of stored energy in at least one reactive component of the ground unit coil. In some examples, performing the power transfer direction swap may additionally, or instead, comprise: reducing at least a portion of stored energy in at least one reactive component of the vehicle unit coil.

In order determine the amount of the stored energy to be reduced, the method may comprise determining, accessing, measuring, calculating or estimating the amount of stored energy. In such examples, the one or more power transfer direction swap parameters may comprise one or more selected from: a stored energy in the at least one reactive component of the ground unit coil; a stored energy in the at least one reactive component of the vehicle unit coil.

In some examples, the method may comprise receiving, determining, accessing, measuring, calculating or estimating a target power of the ground unit or the vehicle unit, or a target current to be applied at the ground unit coil or the vehicle unit coil. The target power or the target current may in some examples be based on the stored energy, and may in some examples be determined based on the stored energy. In some examples, the target power or the target current may be a power or a current at which a power transfer direction swap has a reduced likelihood of causing a transient response such as a spike in voltage or current. In some examples, the target power or the target current may be received from a source or a drain, for example from a home-based power supply system or from an electrical grid, such as an operator of an electrical grid.

In some examples, reducing the at least a portion of the stored energy comprises one or more selected from: reducing a current applied across the ground unit coil; reducing a current applied across the vehicle unit coil. The current applied across the ground unit coil or the current applied across the vehicle unit coil may be reduced in any suitable manner, and may in some examples be reduced based on an amount of the stored energy, the target power or the target current. In some examples, the current applied across the ground unit coil may be applied following receipt of one or more ground unit coil control signals from a corresponding control circuit of the ground unit. For example, the control circuit of the ground unit may be configured to use the one or more ground unit coil control signals, for example the duty cycle thereof, to control one or more switches of a converter (such as an inverter or rectifier) of the ground unit configured to apply the current across the ground unit coil. In such examples, the reduction in the current applied across the ground unit coil may be performed by reducing the pulse width of the one or more ground unit coil control signals. In some examples, the current applied across the vehicle unit coil may be applied following receipt of one or more vehicle unit coil control signals from a corresponding control circuit of the vehicle unit. For example, the control circuit of the vehicle unit may be configured to use the one or more vehicle unit coil control signals, for example the duty cycle thereof, to control one or more switches of a converter (such as an inverter or rectifier) of the vehicle unit configured to apply the current across the vehicle unit coil. In such examples, the reduction in the current applied across the vehicle unit coil may be performed by reducing the pulse width of the one or more vehicle unit coil control signals. In some examples, the one or more power transfer direction swap parameters may therefore comprise any suitable parameters associated with adjusting the timing of the one or more ground unit coil control signals or the one or more vehicle unit coil control signals, for example one or more selected from: the pulse width of the one or more ground unit coil control signals; the duty cycle of the one or more ground unit coil control signals; the pulse width of the one or more vehicle unit coil control signals; the duty cycle of the one or more vehicle unit coil control signals. The reduction in the current applied across the ground unit coil or the current applied across the vehicle unit coil may be performed in any suitable manner, and the reduction may follow a predetermined pattern or rate, for example such that the current is reduced gradually over a current reduction period. A gradual reduction in the current applied across the ground unit coil or the current applied across the vehicle unit coil over the reduction period may in some examples act to avoid current or voltage spikes as a result of the power transfer direction swap. While a reduction in the current applied across the ground unit coil and the vehicle unit coil are discussed in terms of adjusting one or more control signals, such as switch timing of a corresponding control circuit (for example a corresponding converter), any suitable manner of reducing the current will be appreciated. While the adjustment of the control signals, such as control circuit switch timing, is discussed in terms of pulse width modulation, any suitable manner of adjusting the control signals (such as via control circuit switch timing), will be appreciated, such as frequency modulation, phase-shift modulation, pulse frequency modulation, amplitude modulation, or real-time adaptive control. In such examples, the power transfer direction swap parameters may be any suitable parameters associated with the manner of adjusting the control signals.

In some examples, reducing the at least a portion of the stored energy comprises one or more selected from: adjusting an impedance parameter of the vehicle unit coil; adjusting an impedance parameter of the ground unit coil. The impedance parameter may be associated with, or may control, an impedance value of the corresponding ground unit coil or vehicle unit coil. It will be appreciated that in some examples the impedance parameter may be used to control a current applied across the ground unit coil or the current applied across the vehicle unit coil, for example to reduce the current applied across the ground unit coil or the current applied across the vehicle unit coil as discussed herein. The impedance parameter may in some examples be based on an amount of the stored energy, the target power or the target current. It may be desired to provide individual control of resistive and capacitive impedance of components of the vehicle unit or the ground unit, for example in order to optimize stored energy reduction. In some examples therefore, reducing the at least a portion of the stored energy may comprise one or more selected from: adjusting a resistive impedance parameter of the vehicle unit coil; adjusting a capacitive impedance parameter of the vehicle unit coil; adjusting a resistive impedance parameter of the ground unit coil; adjusting a capacitive impedance parameter of the ground unit coil. In some examples, the one or more power transfer direction swap parameters may therefore comprise one or more selected from: the resistive impedance parameter of the vehicle unit coil; the capacitive impedance parameter of the vehicle unit coil; the resistive impedance parameter of the ground unit coil; the capacitive impedance parameter of the ground unit coil. It will be appreciated that the resistive impedance parameter and the capacitive impedance parameter may be any suitable parameter from which a resistive impedance or a capacitive impedance may be calculated or adjusted. For example, the resistive impedance parameter and the capacitive impedance parameter may be associated with one or more ground unit coil control signals or vehicle unit coil control signals as described herein, which may be configured to be received at one or more switches of a converter (such as an inverter or rectifier) of the ground unit or the vehicle unit, the control signals configured to actuate the one or more switches. In some examples, the resistive impedance parameter and the capacitive impedance parameter may be associated with a transmission time of the one or more control signals, for example controlling a time delay in the transmission time. The resistive impedance parameter and the capacitive impedance parameter, or the one or more control signals, may be determined according to a zero crossing detection of a current of the ground unit coil or the vehicle unit coil.

In some examples, reducing at least a portion of the stored energy comprises: shorting at least one component selected from: a component of the ground unit; a component of the vehicle unit; and wherein the one or more power transfer direction swap parameters comprise one or more selected from: a component identifier of the component of the ground unit; an operating mode of the component of the ground unit; a component identifier of the component of the vehicle unit; a switch mode; an operating mode of the component of the vehicle unit. In some examples, the shorting may be performed in any suitable manner, and may for example be performed on receipt of an operating mode change request transmitted by control circuitry of the ground unit or the vehicle unit. In some examples, the at least one component is a switch, for example a switch of a converter (such as a rectifier or inverter) of the ground unit or the vehicle unit. It will be appreciated that the at least one component may be any suitable component of the vehicle unit or the ground unit and may be selected according to an amount of the stored energy, the target power or the target current.

The power direction swap may in some examples be performed by a control circuit of the ground unit or a control circuit of the vehicle unit, or any suitable combination thereof, for example using one or more control signals based on the power transfer direction swap parameters. For example, a power transfer direction swap request may be received from the ground unit or the vehicle unit, at the control circuit, which may transmit one or more control signals to perform the power transfer direction swap as described herein.

In some examples, performing the power transfer direction swap comprises: ceasing a ground unit coil current across the ground unit coil and a vehicle unit coil current across the vehicle unit coil; and reestablishing the ground unit coil current and the vehicle unit coil current; wherein following the reestablishment, the ground unit coil current and the vehicle unit coil current is configured to reach a corresponding steady state. In some examples, one or more of ceasing the ground unit coil current, ceasing the vehicle unit coil current, reestablishing the ground unit coil current, and reestablishing the vehicle unit coil current, may be controlled by at least one of the power transfer direction swap parameters. In some examples, the ground unit coil current and the vehicle unit coil current may be configured to reach the steady state following a reestablishment period, wherein the reestablishment period may in some examples be any suitable period such that the power transfer direction swap provides an uninterrupted power supply. In some examples, the reestablishment period may be determined in accordance with at least one of the power transfer direction swap parameters. In some examples, during the reestablishment period, the ground unit coil current is configured to remain below a ground unit coil current threshold, and the vehicle unit coil current is configured to remain below a vehicle unit coil current threshold. In some examples, the ground unit coil current threshold and the vehicle unit coil current threshold may be any suitable values and may, for example, be based on one or more components of the ground unit or the vehicle unit. For example, the ground unit coil current threshold and the vehicle unit coil current threshold may be based on a known breakdown voltage of one or more capacitors or switches of the ground unit or the vehicle unit, or a known or determined threshold associated with arcing due to high voltage in the ground unit coil or the vehicle unit coil.

In some examples, the method further comprises, prior to receiving the one or more vehicle unit coil parameters: performing an initial power transfer direction swap for determining one or more calibration parameters. In some such examples, the one or more power transfer direction swap parameters may be determined based at least in part on the calibration parameters. In some examples, the method further comprises, determining or measuring a current at a converter of the ground unit or the vehicle unit (which may be a rectifier or converter, for example based on a direction of wireless power transfer being performed), and providing one or more control signals based on the determined or measured current, for example to control switch timings of the converter. Such a control of switch timing (such as switch shorting) of the converter (such as a rectifier) may be used for vehicle unit active rectifiers. In some examples, the method further comprises setting one or more power transfer direction swap parameters (such as one or more impedance parameters based on an available battery voltage), and based on one or more known system parameters (such as those of an impedance matching network or coil type) measuring or determining the coupling factor.

In some examples, performing the power transfer direction swap comprises: communicating at least one of the power transfer direction swap parameters to the vehicle unit to control a portion of the power direction swap performed by the vehicle unit. In some examples, communicating the at least one of the power transfer direction swap parameters to the vehicle is performed using a bi-directional communication channel, the bi-directional communication channel operating on a channel frequency band different to a inductive power transfer frequency band of the power transfer. It will be appreciated that the bi-directional communication channel may be any suitable channel, such as a bi-directional communication channel as described for aspects of the present disclosure.

In accordance with a further aspect of the present disclosure, there is provided a method of switching a direction of wireless power transfer between a wireless power transfer coil of a vehicle unit and a wireless power transfer coil of a ground unit, the method comprising: receiving at the ground unit, using control circuitry, one or more vehicle unit coil parameters, the one or more vehicle unit coil parameters including a vehicle unit coil position relative to the ground unit coil, and a vehicle unit coil inductance; determining, using control circuitry, based on the vehicle unit coil position relative to the ground unit coil, a mutual inductance between the vehicle unit coil and the ground unit coil; determining, using control circuitry, based on the mutual inductance, the vehicle unit coil inductance, and a ground unit coil inductance, a coupling factor between the vehicle unit coil and the ground unit coil; determining, using control circuitry, based on the coupling factor, one or more power transfer direction swap parameters; receiving at the ground unit, using control circuitry, instructions to perform a power transfer direction swap; and performing, using control circuitry, based on the determined one or more power transfer direction swap parameters, the power transfer direction swap. Examples of the method will be appreciated comprising any combination of steps of the method of the first aspect.

In accordance with a further aspect of the present disclosure, there is provided a wireless power transfer system for switching a direction of wireless power transfer, the system comprising: a ground unit comprising a wireless power transfer coil; and a vehicle unit comprising a wireless power transfer coil; the system further comprising a processor configured to: receive one or more vehicle unit coil parameters, the one or more vehicle unit coil parameters including a vehicle unit coil position relative to the ground unit coil; determine, based on the vehicle unit coil position relative to the ground unit coil position, a coupling factor between the vehicle unit coil and the ground unit coil; determine, based on the coupling factor, one or more power transfer direction swap parameters; receive instructions to perform a power transfer direction swap; and perform, based on the determined one or more power transfer direction swap parameters, the power transfer direction swap.

In accordance with a further aspect of the present disclosure, there is provided a ground unit of a wireless power transfer system for switching a direction of wireless power transfer, the ground unit comprising: a wireless power transfer coil, and a processor configured to: receive one or more vehicle unit coil parameters associated with a power transfer coil of a vehicle unit, the one or more vehicle unit coil parameters including a vehicle unit coil position relative to the ground unit coil; determine, based on the vehicle unit coil position relative to the ground unit coil position, a coupling factor between the vehicle unit coil and the ground unit coil; determine, based on the coupling factor, one or more power transfer direction swap parameters; receive instructions to perform a power transfer direction swap; and perform, based on the determined one or more power transfer direction swap parameters, the power transfer direction swap.

In accordance with a further aspect of the present disclosure, there is provided a vehicle unit of a wireless power transfer system for switching a direction of wireless power transfer, the vehicle unit comprising: a wireless power transfer coil, and a processor configured to: transmit one or more vehicle unit coil parameters of the wireless power transfer coil to a ground unit of a wireless power transfer system, the one or more vehicle unit coil parameters including a vehicle unit coil position relative to a wireless power transfer coil of the ground unit. In some examples, the processor may be configured to: determine, based on the vehicle unit coil position relative to the ground unit coil position, a coupling factor between the vehicle unit coil and the ground unit coil. In some examples, the processor may be configured to: determine, based on the coupling factor, one or more power transfer direction swap parameters. In some examples, the processor may be configured to: receive instructions to perform a power transfer direction swap. In some examples, the processor may be configured to: perform, based on the determined one or more power transfer direction swap parameters, the power transfer direction swap.

It will be appreciated that the system, the ground unit or the vehicle unit may be configured to perform any suitable steps of a method in accordance with the present disclosure.

In accordance with a further aspect of the present disclosure, there is provided a ground unit of a wireless power transfer system for enabling power transfer between an electric vehicle and a power source or a power drain, the ground unit comprising: one or more power transfer coils configured for providing the wireless power transfer on an inductive power transfer frequency band; one or more positioning coils configured to emit position data suitable for detecting, measuring or sensing by the vehicle; and one or more communication antennas configured to communicate with the vehicle by way of a bidirectional communication channel; wherein the bidirectional communication channel operates on a frequency band which is different to the inductive power transfer frequency band. The term "communication antennas" will be understood within the context of the present disclosure to mean any suitable antenna and may in some examples include one or more "communication coils". Usage of the term "communication coils" in the present disclosure is therefore to be interpreted to mean "communication coils or communication antennas" as suitable.

The term "power transfer coils" will be understood herein to mean any suitable circuitry configured for engaging with a second such circuitry for providing inductive wireless power transfer thereacross in either direction, and may comprise a ground unit coil as described herein in relation to the first aspect. The power transfer coils may, for example, be configured to engage with one or more power transfer coils of the vehicle for providing the inductive wireless power transfer. The wireless power transfer may be between any suitable source and drain, for example between an electrical grid or a home, and an electric vehicle battery.

The inductive power transfer frequency band will be appreciated to be any suitable band such as between 10 kHz to 100 kHz, and in some examples may be between 80 kHz and 90 kHz.

The term "positioning coils" will be understood within the present context to mean any suitable coils configured for engaging in a unidirectional communication with the vehicle by way of, for example, a unidirectional communication channel, for the purpose of providing a position determination of the vehicle, such as a position relative to the ground unit.

The positioning coils may, for example, be configured to emit the position data, for example in the form of a field or a signal, suitable for sensing, detecting or measuring by positioning circuitry of the vehicle, for example one or more positioning coils of the vehicle. Following the sensing, detecting or measuring of the position data by the positioning circuitry of the vehicle, a processor of the vehicle may be configured to determine a position, for example comprising at least an x-component and a y-component, of the vehicle relative to the ground unit. The determined position may in some examples comprise a z-component representing a height of the position of the vehicle relative to the ground unit.

In some examples the bidirectional communication channel will be understood to operate directly between the one or more communication antennas and the vehicle. In some examples the one or more communication antennas may be communication coils, and the bidirectional communication channel may be implemented, at least in part, using inductive coupling. A direct operation between the one or more communication antennas and the vehicle may, for example, avoid additional protocol overhead which may be associated with other communication forms such as WiFi. Examples will be appreciated wherein the bidirectional communication channel is implemented using any suitable combination of communication technologies, and may for examples comprise one, or a combination of, inductive coupling; radio frequency (RF) technologies; radio frequency identification (RFID); Bluetooth; Bluetooth low energy (BLE); ultra wide band (UWB). By way of example, the one or more communication antennas may comprise an RF antenna configured for transmitting communication signals to the vehicle, and one or more communication coils configured for receiving communication signals from the vehicle. Any suitable combination of communication technologies will be envisaged within the scope of the present disclosure. The direct communication will be understood as being distinguished from any other communication protocol which includes any communication or routing to an intermediary receiver or transceiver between the one or more communication antennas or coils and the vehicle, such as WiFi which includes additional protocol overhead and routing, rendering the communication protocol comparatively non-"direct". In some examples, the direct communication may be performed by way of inductive coupling or by any suitable direct communication technology.

The bidirectional communication channel can, in some examples, be used to establish any suitable synchronisation between the ground unit and the vehicle, and may in some examples be configured to synchronise for data transfer between the ground unit and the vehicle. In some examples, the bidirectional communication channel may be configured to provide timing or clock synchronisation between the ground unit and the vehicle.

It will be appreciated that the one or more communication antennas or coils may be configured to communicate with the vehicle using the bidirectional communication channel over any suitable distance, for example based on a technology used and the environment. For example magnetic coupling may be optimised (such as in accordance with a permissible signal to noise ratio) for communication up to 10 m. Higher distances will be appreciated for radio communication methods, such as for ultra wide band (UWB) communication, which may reach up to 100 m.

In some examples, the one or more communication coils are configured to communicate with the vehicle while the one or more power transfer coils provide the wireless power transfer.

In some examples, the inductive power transfer frequency band is approximately 10 kHz to 100 kHz, and may be approximately 80 kHz to 90 kHz. In some examples, the bidirectional communication channel operates on a bidirectional communication frequency band which is greater than 100 kHz, and may be any suitable frequency band selected from 100 kHz to 1 GHz, or greater than 2.5 GHz. It will be appreciated that the bidirectional communication channel frequency band may be any suitable frequency band. In some examples, the bidirectional communication channel frequency band is an Industrial, Scientific, and Medical (ISM) band.

In some examples, the one or more communication antennas or coils comprises a single communication antenna or coil configured to transmit signals to, and receive signals from, the vehicle. In such examples the single communication antenna or coil forms a transceiver. In some examples, the single communication antenna or coil may be configured to switch between operation in: a receiving mode during which the antenna or coil is configured for receiving a communication signal from the vehicle; and, a transmitting mode during which the antenna or coil is configured for transmitting a communication signal to the vehicle. In some examples, the transmitting of signals to, and receiving of signals from, the vehicle is performed using one or more selected from: frequency division multiplexing (FDM); time-division multiplexing (TDM); code division multiplexing (CDM).

In some examples, the one or more communication coils comprises a transmitting coil configured to transmit a signal to the vehicle; and a receiving coil configured to receive a signal from the vehicle.

In some examples, the one or more communication coils are configured to enable the signal transmission and the signal receipt to occur substantially cotemporally.

In some examples, the transmitting coil or the receiving coil is the same as one of the one or more positioning coils. In some examples, the transmitting of signals to, and receiving of signals from, the vehicle is performed using one or more selected from: frequency division multiplexing (FDM); time-division multiplexing (TDM); code division multiplexing (CDM).

In some examples, the one or more power transfer coils define an optimal parking region, and wherein the one or more communication coils are positioned on the ground unit such that when a vehicle unit of a vehicle is located within the optimal parking region, a coupling factor of the bidirectional communication channel is above a coupling factor threshold. In some examples the optimal parking region is approximately 74 mm x 100 mm. In some examples, one or more communication coils of the vehicle unit may be used to position the vehicle above the ground unit, such that the vehicle unit is located within the optimal parking region, and a coupling factor of the bidirectional communication channel between the vehicle unit and the ground unit is above a predefined coupling factor threshold.

In accordance with a further aspect of the present disclosure, there is provided a wireless power transfer system for enabling power transfer between an electric vehicle and a power source or a power drain, the system comprising: a ground unit comprising: one or more ground unit power transfer coils; one or more ground unit positioning coils configured to emit position data suitable for detecting, measuring or sensing by the vehicle; and one or more ground unit communication coils configured to communicate with the vehicle by way of a bidirectional communication channel; and a vehicle unit comprising: one or more vehicle unit power transfer coils configured to cooperate with the one or more ground unit power transfer coils for providing the wireless power transfer on a inductive power transfer frequency band; one or more vehicle unit positioning coils configured to detect, measure or sense the position data; and one or more vehicle unit communication coils configured to communicate with the ground unit by way of the bidirectional communication channel; wherein the bidirectional communication channel operates on a frequency band which is different to the inductive power transfer frequency band.

While the one or more ground unit positioning coils are configured to transmit position data to the vehicle, it will be appreciated that any suitable data may be transmitted, and examples of types of data which may be transmitted may, for example be identified in Standard J2954, Chapter 12, Appendix C.

It will be appreciated that the ground unit may be a ground unit in accordance with an aspect of the present disclosure.

In accordance with a further aspect of the present disclosure, there is provided a method for communicating between a ground unit of a wireless power transfer system and an electric vehicle, the method comprising: emitting or receiving, by the one or more communication antennas or coils of the ground unit, a communication signal from, or for detection, measuring or sensing by, the vehicle using a bidirectional communication channel, the bidirectional communication channel operating on a frequency band which is different to the inductive power transfer frequency band.

In some examples, the emitting or receiving the communication is performed while the wireless power transfer system provides the wireless power transfer. In some examples, emitting or receiving the communication is performed while the wireless power transfer system do not provide the wireless power transfer.

In some examples, the ground unit may be a ground unit in accordance with an aspect of the present disclosure, and any features described as suitable therefore will be appreciated as suitable for use in the method.

In accordance with a further aspect of the present disclosure, there is provided a non-transitory storage media storing computer-readable instructions thereon configured, when executed by a processor, to perform any steps of a method of the present disclosure.

It will be appreciated that any features described herein as suitable for incorporated into one or more aspects or examples of the present disclosure are intended to be generalizable across any and all aspects and examples of the present disclosure.

BRIEF DESCRIPTION OF THE DRAWINGS

FIG. 1 illustrates an example parking facility with multiple wireless charging stations for use by electric vehicles in accordance with systems and methods of the present disclosure;

FIG. 2 is a hierarchical block diagram of an example wireless power transfer system for wireless electric vehicle charging, suitable for use in accordance with systems and methods of the present disclosure;

FIG. 3A shows an example parking space and a parking scenario illustrating a positional relationship between a vehicle and a wireless charging station in a ground-based coordinate system, suitable for use in accordance with systems and methods of the present disclosure;

FIG. 3B shows an example parking space and a parking scenario illustrating a positional relationship between a wireless charging station and a vehicle in a vehicle-based coordinate system, suitable for use in accordance with systems and methods of the present disclosure;

FIG. 4 shows a multiple parking space facility providing a plurality of wireless charging stations illustrating an example parking scenario with a vehicle, suitable for use in accordance with systems and methods of the present disclosure;

FIG. 5 shows an example system suitable for use in performing a method of switching a direction of wireless power transfer of the present disclosure, the system comprising the wireless power transfer circuitry of a ground unit and a vehicle unit, a communication system and a positioning system in accordance with the present disclosure;

FIG. 6 shows steps of an example implementation of a power transfer direction switching method in accordance with the present disclosure, using the system of FIG. 5;

FIG. 7A to FIG. 7G shows example voltage and current waveforms of components of the example circuitry of FIG. 5, during the example implementation of FIG. 6 performed in accordance with the present disclosure;

FIG. 8 shows steps of an example method of switching a direction of wireless power transfer of the present disclosure;

FIG. 9A shows an example ground unit of the present disclosure;

FIG. 9B shows an example vehicle unit of a wireless power transfer system of the present disclosure suitable for use in conjunction with the example ground unit of FIG. 9A;

FIG. 9C shows a further example ground unit of the present disclosure;

FIG. 9D shows a further example vehicle unit of a wireless power transfer system of the present disclosure, suitable for use in conjunction with the example ground unit of FIG. 9C;

FIG. 10A to FIG. 10D each shows a further example ground unit in accordance with the present disclosure, suitable for use in a wireless power transfer system of the present disclosure;

FIG. 11 shows an example wireless power transfer system of the present disclosure, including a vehicle unit of the example of FIG. 9B, in conjunction with a ground unit of the example of FIG. 9A;

FIG. 12 shows a further example wireless power transfer system of the present disclosure, including a vehicle unit of the example of FIG. 9B, in conjunction with an alternate example of a ground unit of the present disclosure;

FIG. 13 shows a further example wireless power transfer system of the present disclosure, including an alternate vehicle unit and ground unit of the present disclosure, wherein the bidirectional communication channel is implemented using radio frequency antennas for transmitting and receiving communication signals; and

FIG. 14 shows a further example wireless power transfer system of the present disclosure, including an alternate vehicle unit and ground unit of the present disclosure, wherein the bidirectional communication channel is implemented using a single radio frequency antenna for both transmitting and receiving communication signals.

## DETAILED DESCRIPTION

Wireless inductive charging of electric vehicles (EV) may provide numerous benefits such as improved convenience, safety, and reliability. It eliminates cabling that is often impedimental for pedestrians and prone for wear out, vandalism, and pollution. It can preserve urban aesthetics without compromising functionality and provide a suitable solution for autonomous parking. It may increase availability of parked vehicles for vehicle-to-grid (V2G) power transfer e.g., to stabilize the electricity grid as the demand for fluctuating renewable energy increases. In the context of the present disclosure an EV may be any appropriate type of vehicle, such as a car, a motorcycle, a golf cart, a scooter, a marine vessel, an aircraft, etc. Further, the term "EV" is understood to include any type of EV, such as a battery electric vehicle (BEV), a hybrid electric vehicle (HEV), a plug-in hybrid electric vehicle (PHEV), a fuel cell electric vehicle (FCEV). Generally, the charging referred to herein is in relation to a traction battery of an EV, e.g., a battery configured to supply power to an electrified powertrain of the EV. However, where technically feasible, the disclosure extends (alternatively or additionally) to charging an ancillary battery of a vehicle, e.g., a battery of a vehicle configured to power an ancillary system or peripheral device of a vehicle, such as a power take-off device of a vehicle.

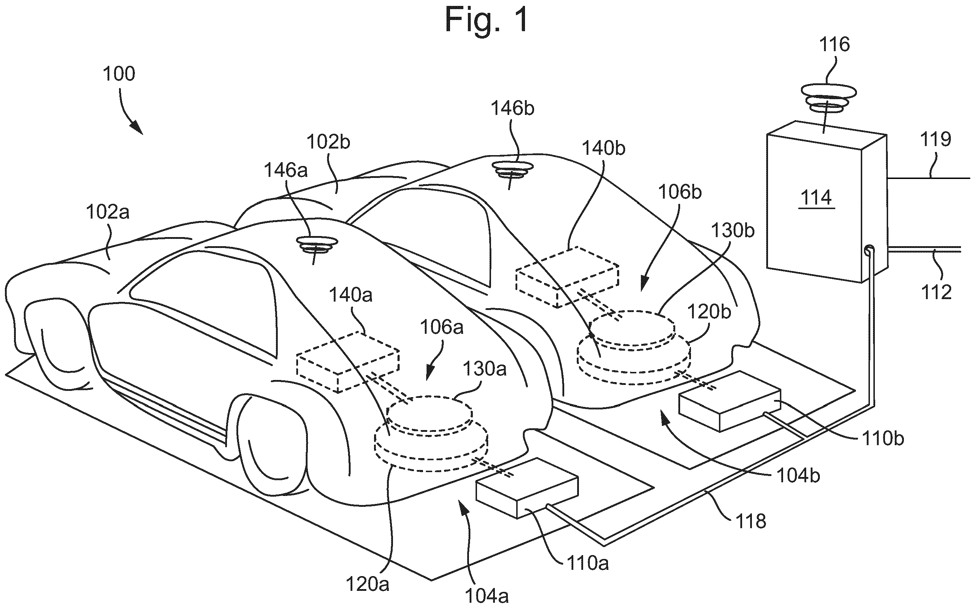

FIG. 1 illustrates an example of a parking facility 100 providing wireless charging services. Two wireless charging-enabled vehicles, 102a, 102b integrating WPT vehicle units 130a, 130b are each parked over a WPT ground unit, 120a, 120b. Both vehicle unit and ground unit include a power transfer coil (not shown) sometimes also referred to as an induction coil configured to wirelessly transfer power based on the Faraday induction principle. Both vehicle unit and ground unit are part of a vehicle assembly (VA) and a ground assembly (GA) respectively, which also include respective portions of a position detection system.

In some implementations, the ground units are surface mounted on the ground or the floor of a parking facility. In other implementations, the ground units are flush mounted in the floor or buried in the ground (e.g., in the asphalt).

In the example shown in Figure 1, the power converters 110a, 110b convert power received by WPT vehicle units 130a, 130b to a form suitable for charging the vehicle's traction battery (not shown). In some examples and as described in U.S. Patent US 9,561,730 B2, the power converters 140a, 140b may be integrated with power converters used for plug-in charging of the vehicle, commonly called on-board chargers (OBC), or other on-board vehicle components. The WPT ground units 120a, 120b are shown linked to external power converters 110a, 110b, each connected to a power supply bus 118. In some implementations, the power converters 110a, 110b are configured and mounted as a "wall box". In other implementations, the power converters or parts thereof are integrated into the WPT ground units. The power supply bus 118 is in turn connected to a central power distribution unit 114. In some implementations and operations, the central power distribution unit receives power from a power utility 112 sometimes referred to as "power grid" and provides DC power to the bus 118, and the power converters 110a, 110b are inverters, such as the multi-level inverter described in U.S. Patent Application 18/486,830, filed October 13, 2023, and incorporated here by reference. The power converters 110a, 110b, provide low-frequency (LF) power signals, such as the 85 kHz signals used for WPT according to the SAE J2954 standard, to the WPT ground units 120a, 120b, to turn into LF magnetic fields for WPT. In other examples, the power distribution unit 114 provides the LF signals directly to each WPT ground unit, and power converters 110a, 110b are simpler or not present.

In yet other examples, the power distribution unit 114 and bus 118 are not present, and the power converters 110a, 110b are each connected directly to the power utility 112 and convert AC power from the utility to LF power for wireless power transfer. The combination of a WPT ground unit (e.g., 120a), a power converter (e.g., 110a), and any other ground-side electronics (not shown) constitutes a wireless charging station (e.g., 104a) as indicated in FIG. 1. In some cases, the WPT ground units 120a, 120b are also referred to as Ground Assembly Resonators (GAR) or ground assembly pads, and the wireless charging station is also referred to as a Ground Assembly (GA) or Electric Vehicle Supply Equipment (EVSE). Analogously, the WPT vehicle units 130a, 130b are sometimes referred to as Vehicle Assembly Resonators (VAR) or vehicle assembly pads and the combination of a WPT vehicle unit (e.g., 130a) and a power converter (e.g., 140a) and any other vehicle-side electronics (not shown) constitutes a Vehicle Assembly (VA) (e.g., 106a). Each of the power connections shown may be bi-directional, allowing the vehicles to discharge power from their batteries to the power utility 112 in a vehicle-to-grid (V2G), or other load in a vehicle-to-home (V2H), vehicle-to-vehicle (V2V) or similar arrangement (generally V2X).

FIG. 1 illustrates vehicles 102a, 102b, and power distribution unit 114 providing wireless communication units 146a, 146b, and 116, respectively. The wireless communication unit 116 may be configured to wirelessly communicate with the vehicles 102a and 102b e.g., based on a WiFi IEEE 802.11x standard. In SAE standard conformant wireless charging systems, this communication is used for exchanging data between the GA and VA for purposes of WPT control and safety. Further, the power distribution unit 114 provides an interface 119 configured to communicate with external entities (e.g., a charging operation center) via a communication backhaul (not shown). This backhaul may rely on radio communications (e.g., via communication unit 116), power line communications (e.g., via power utility 112), or any other line communications including fiber optic. In the example parking facility 100, wireless communication unit 116 is configured to serve multiple vehicles. In other parking facilities, each of the wireless charging stations 104a, 104b provide a wireless communication unit (not shown) configured to communicate with the respective vehicles 102a, 102b.

Beside the WPT coil, the WPT ground units 120a, 120b or the WPT vehicle units 130a, 130b, or both may include various sensors and detection systems (not shown). For example, they may include systems for detecting a positional relationship between the vehicle unit and the ground unit. The positional relationship is needed to guide the vehicle to the charging spot, to mutually align the vehicle-side and groundside WPT coils within the specified tolerance, and for pairing of a vehicle with a wireless charging station as needed to establish communication between the right entities in multiple vehicle multiple charging station scenarios. The ground unit may also include sensors and detection systems to determine presence of a foreign object that has the potential to heat up by induction heating or any hazardous events caused by an incandescent object on the surface of the ground unit. Further, it may include sensors and a detection system for determining presence of a living object e.g., a hand of a person or animals approaching a critical space beneath the vehicle where electromagnetic field exposure exceeds certain limits (e.g., based on IEEE or ICNIRP guidelines). Moreover, the ground unit may include sensors and a detection system for determining a presence of the vehicle or a type of the vehicle. In some implementations, sensors and detection systems or parts thereof may be external to the ground unit or vehicle unit.

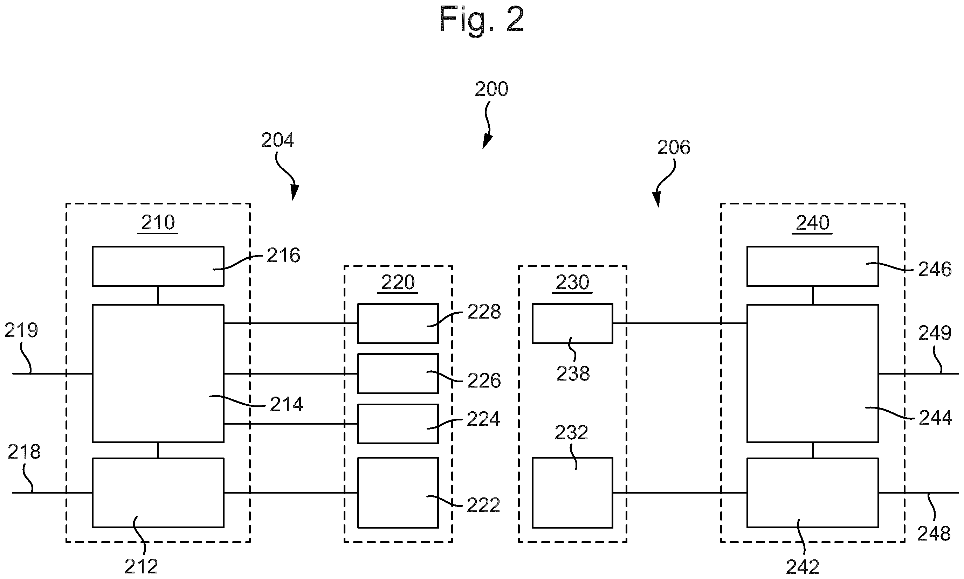

FIG. 2 is a hierarchical block diagram of an example WPT system 200 for wireless electric vehicle charging. At the top hierarchy level, the system 200 comprises a GA 204 and a VA 206 that may refer to the wireless charging station 104a and the VA 106a, respectively, of FIG. 1. The next lower level shows the GA 204 composed of a GA power conversion and control unit 210 and a WPT ground unit 220 (e.g., 120a of FIG. 1) and various connections between these blocks. Splitting the GA into two blocks implies implementations where the GA power conversion and control unit and the ground unit are physically separated (as illustrated in FIG. 1) and interconnected via a several meters long multiwire cable referred to herein as GA feeder cable (not shown). However, it should not exclude implementations where the GA power conversion and control unit is entirely or partially integrated in the ground unit forming one physical unit with a common housing (not shown).

At the third level, the GA power conversion and control unit includes a GA power converter 212 (e.g., 110a of FIG. 1), a GA controller 214, and a GA wireless communication unit 216 (e.g., 132a of FIG. 1). The ground unit 220 integrates a GA WPT coil 222 as well as various functions as needed for Foreign Object Detection (FOD), Living Object Detection (LOD), Vehicle Detection (VD), and Position Detection (PD) as previously discussed with reference to FIG. 1. In the example of FIG. 2, these functions are provided by a FOD unit 224, a LOD unit 226, and a GA PD unit 228, each configured and connected to the GA controller for exchanging data and control. In some implementations, these functions share or partially share one common hardware platform referred to as a multi-purpose detection system.

In an implementation conforming with the SAE standard, the GA wireless communication unit 216 is a WiFi Access Point providing an air interface to a Wireless Local Area Network (WLAN) of a parking facility. Certain parking facilities (e.g., parking facility 100 of FIG. 1) provide a central WiFi access point associated to multiple GAs. In such implementations, the GA wireless communication unit 216 is external to the GA 204. In another implementation, the GA wireless communication unit is integral part of the ground unit 220.

The GA WPT coil 222 may include a tuning and impedance matching network (not shown) forming a resonant circuit and the ground-unit is referred to as the GAR as previously mentioned. In other implementations, the tuning and impedance matching network or parts thereof are included in the GA power converter 212. Further, the GA controller 214 interfaces to the GA power converter 212 and the GA wireless communication unit 216 for data exchange and system control. It also provides a data interface 219 (e.g., Ethernet) to communicate with a system external entity e.g., via a backbone network as mentioned with reference to FIG. 1. Moreover, the GA power converter 212 disposes a power interface 218 for feeding or receiving AC or DC power as discussed with reference to FIG. 1.

At the second level, FIG. 2 shows the VA 206 composed of a WPT vehicle unit 230 (e.g., 106a of FIG. 1) connected to a VA power conversion and control unit 240. At a third level, the VA power conversion and control unit 240 comprises a VA power converter 242 (e.g., 108a of FIG. 1), a VA controller 244, and a VA wireless communication unit 246 (e.g., 132a of FIG. 1). The vehicle unit 230 comprises a VA WPT coil 232 and a VA PD unit 238, the vehicle-side counterpart of the GA PD unit 228 interfacing with the VA controller for data exchange and control. Splitting the VA into two blocks implies implementations where the VA power conversion and control unit and the vehicle unit are physically separated (as illustrated in FIG. 1) and interconnected via a multiwire cable referred to herein as VA feeder cable (not shown). However, this should not exclude implementations where the VA power conversion and control unit 240 is entirely or partially integrated in the vehicle unit 230 forming one physical unit with a common housing (not shown).

In a standard conforming implementation, the VA wireless communication unit 246 is a WiFi Client. As with the GA wireless communication unit, the VA wireless communication unit may be external to the VA 206 e.g., mounted anywhere on the vehicle or parts or it may be partially or fully integrated into the vehicle unit.

In some implementations, the VA WPT coil 232 includes a tuning and impedance matching network (not shown) forming a resonant circuit and the vehicle unit is referred to as the VAR as previously mentioned. Further, the VA controller interfaces to the VA power converter and the VA wireless communication unit for data exchange and control. It also provides a line communication interface 249, e.g., a CAN bus interface to communicate with an external vehicle onboard entity. Moreover, the VA power converter disposes a power interface 248 for feeding or receiving DC power as previously discussed with reference to FIG. 1.

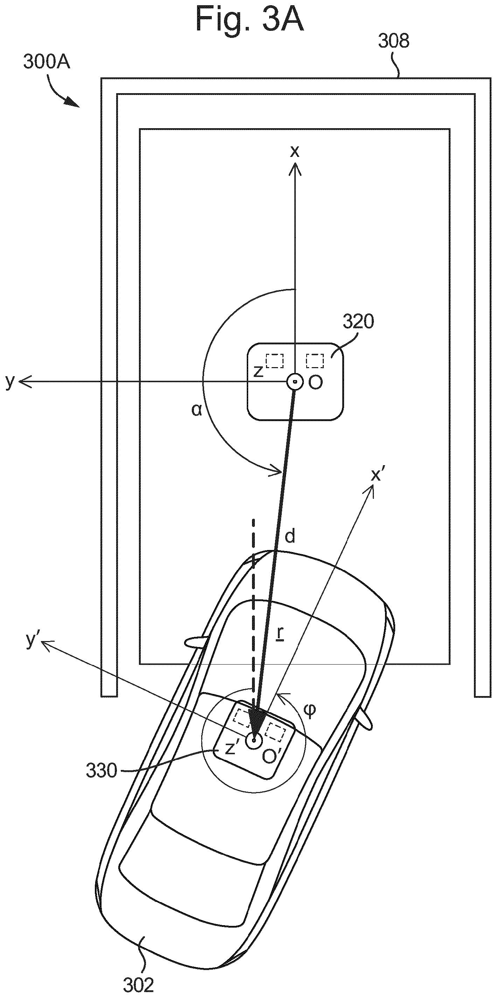

FIG. 3A shows an example parking space and a parking scenario 300A illustrating a positional relationship between a vehicle unit 330 (e.g., 106a of FIG. 1 or 230 of FIG. 2) and a ground unit 320 (e.g., 104a of FIG. 1 or 220 of FIG. 2) as it may be needed for guidance, alignment, and pairing. FIG. 3A represents the positional relationship in a ground-based coordinate system defined by perpendicular x- y-, and z-axes and having its origin O in the ground unit 320. The x- and y-axes (also referred to as the horizontal axes) span a parallel plane to a parking space defined by road markings 308. The z-axis (vertical axis) points towards the zenith assuming a right-hand oriented coordinate system. The x-axis is aligned in parallel to a longitudinal axis of the parking space pointing towards the rear of the parking space.

The vehicle unit 330 mounted on a vehicle 302 may also be associated with a vehicle-based coordinate system defined by perpendicular x'-, y'-, and z'-axes and having its origin O' in the vehicle unit. The x'- and y'-axes span a plane substantially parallel to the parking space, depending on a tilt of the vehicle-unit relative to the floor, while the z'-axis essentially points towards the zenith assuming a right-hand oriented coordinate system. The x'-axis is assumed aligned with a longitudinal axis of the vehicle pointing in driving direction.

The origins O and O' may correspond to a magnetic center point of the ground unit and the vehicle unit, respectively, as explained in U.S. Patent 11,394,253 incorporated here by reference. In some implementations, the vertical coordinate (e.g., z or z') is omitted in a positional relationship as needed for purposes of guidance and alignment. However, it may be used in a process of determining a positional relationship e.g., if a z-height of the vehicle unit 330 matters.

In a ground-based coordinate system omitting z, the positional relationship between the vehicle unit 330 and the ground unit 320 may be defined by the position of the origin O' also denoted P and an angle of rotation $\phi$ measured from the dashed line parallel to the x-axis as indicated in FIG. 3A. Using Cartesian coordinates, the position P may be represented by a vector $\underline{r} = (x_p, y_p)$. In a polar representation, P may be defined by a distance d = square root of $(x_p^2 + y_p^2)$ and an angle $\alpha$ = arctan $(y_p/x_p)$ measured from the x-axis. The angle $\phi$ is also referred herein as the vehicle rotation relative to the parking space. The position P and angle $\phi$ are also referred herein as the pose of the vehicle unit or simply, the pose of the vehicle.

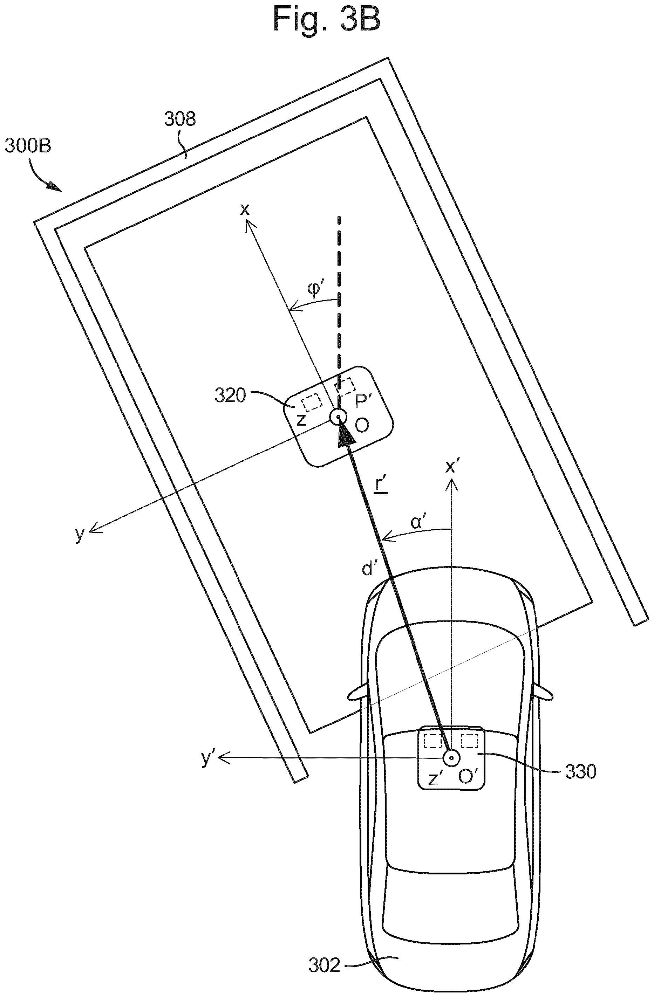

FIG. 3B shows an example parking space and a parking scenario 300B illustrating another positional relationship between a ground unit 320 (e.g., 104a of FIG. 1) comprising the GA PD, and a vehicle unit 330 (e.g., 106a of FIG. 1) as it may be needed for guidance, alignment, and pairing. FIG. 3B represents this positional relationship in a vehicle-based coordinate system defined by perpendicular x'- y'-, and z'-axes and having its origin O' as described above with reference to FIG. 3A.

The ground unit 320 is associated with the ground-based coordinate system defined by perpendicular x-, y-, and z-axes and having its origin O in the ground unit and aligned with road markings 308 as described above with reference to FIG. 3A. In the vehicle-based coordinate system omitting z', the positional relationship between the ground unit 320 and the vehicle unit 330 may be defined by the position of the origin O also denoted P' and an angle of rotation $\phi'$ measured from the dashed line parallel to the x'-axis as indicated in FIG. 3B. Using Cartesian coordinates, the position P' may be represented by a vector $\underline{r}' = (x_p', y_p')$. In a polar representation, P' may be defined by a distance d' = square root of $(x_p'^2 + y_p'^2)$ and an angle $\alpha'$ = arctan $(y_p'/x_p')$ measured from the x-axis. The angle $\phi'$ is also referred herein as the rotation of the ground unit relative to the vehicle. While the distances d' and d are identical, the angles $\alpha$' and $\alpha$ generally differ. The position P' and angle $\phi$' are also referred herein as the pose of the ground-unit or simply, the pose of the parking space.

In some implementations of a guidance and alignment system e.g., using a graphical user interface (GUI) abord the vehicle, the pose of the vehicle unit is represented in a ground-based coordinate system. In other implementations, the pose of the ground unit is displayed in a vehicle-based coordinate system. Various implementations of the vehicle onboard GUI are disclosed in U.S. Patent 9,971,353 incorporated herein as reference. In an example implementation of a guidance and alignment system, the pose of the vehicle unit 330 is determined in a ground-based coordinate system and then mathematically transformed into the pose of the ground-unit 320 as described in U.S. Patent 10,343,537 incorporated herein as reference.

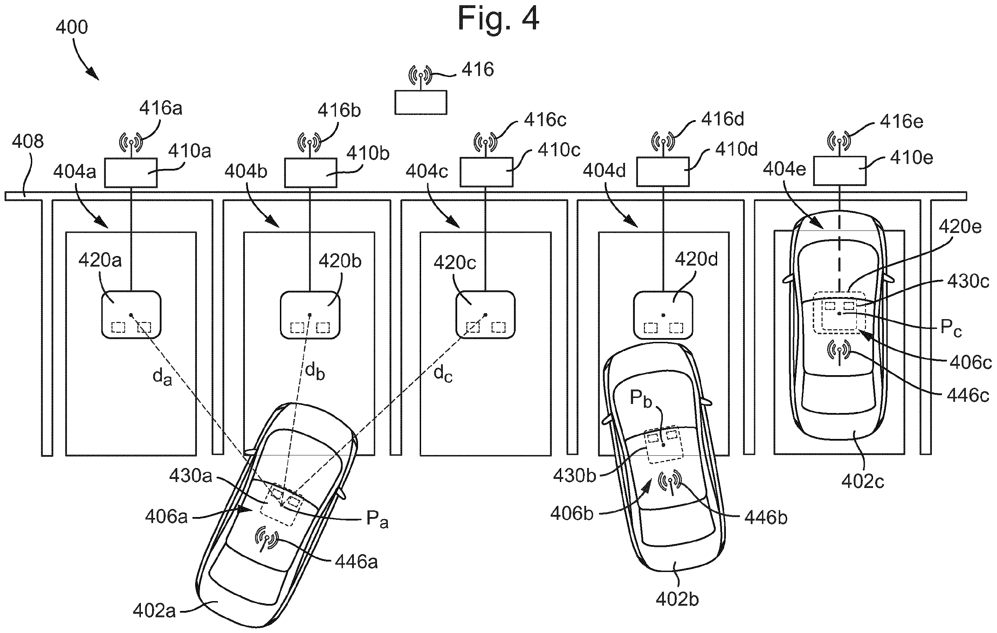

FIG. 4 shows a parking facility 400 illustrating an example multiple parking space scenario with multiple vehicles 402a, 402b, 402c. Parking spaces are outlined by road markings 408. Parking spaces are equipped with wireless charging stations (GAs) referring to GAs 404a, 404b, 404c, 404d, 404e. The plurality of GAs is sometimes also referred to as ground infrastructure. The GAs include respective WPT ground units 420a, 420b, 420c, 420d, 420e suitably positioned in the parking spaces and connected to respective GA power conversion and control units 410a, 410b, 410c, 410d, 410e implemented in some examples as "wall boxes" as described with reference to FIG. 2. Further, each ground unit integrates a GA PD unit (e.g., GA PD unit 228 of FIG. 2, represented in the example shown as respective GA PD configured to interact with a vehicle-side VA PD counterpart for determining a positional relationship as described herein. Moreover, the GAs provide a respective GA wireless communication unit 416a, 416b, 416c, 416d, 416e configured to communicate with vehicles (e.g., 402a, 402b, 402c). FIG. 4 also shows a central GA wireless communication unit 416 (e.g., 116 of FIG. 1) as part of the ground infrastructure connected to each of the GAs (connections not shown). In some implementations, the central communication unit is configured as a communication node of a backbone network (not shown). In other implementations, it is configured to communicate with vehicles (e.g., 402a, 402b, 402c).

Further, FIG. 4 indicates that the vehicles 402a, 402b, 402c are equipped with VAs 406a, 406b, 406c. The VAs include respective WPT vehicle units 430a, 430b, 430c suitably mounted on the vehicles and connected to respective VA power conversion and control units (e.g., 240 of FIG. 2, not shown) as described with reference to FIG. 2. Further, each vehicle unit integrates a VA PD unit (e.g., VA PD unit 238 of FIG. 2, not shown) configured to interact with the ground-side counterpart for determining the positional relationship as described herein. Moreover, the VAs provide a respective VA wireless communication unit 446a, 446b, 446c configured to communicate with any of the GA wireless communication units (e.g., 416a, 416b, 416c, 416d, 416e).

In another aspect, FIG. 4 displays the vehicles 402a and 402b heading towards the ground unit 420b and 420d, respectively, and vehicle 402c parked over the ground unit 430c e.g., for charging. From the perspective of the vehicle 402a, the ground unit 420b is also referred herein to as the target ground unit and the GA 404b as the target GA. From the perspective of the ground unit 420b, the vehicle 402a is also referred to as the vehicle attempting to be charged. Likewise, the GA 404d and its ground unit 420d are referred to as the target GA and the target ground unit, respectively, of the vehicle 402b, which in turn may also be referred to as the vehicle attempting for being charged from GA 404d.

As mentioned with reference to FIG. 1, standard compliant WPT for electric vehicles requires wireless communications between a target GA (e.g., GA 404b) and a vehicle (e.g., 402a). In a multiple parking space multiple vehicle scenario such as illustrated in FIG. 4 by example, it is necessary to assure that the VA (e.g., 406a) is actually communicating with the target GA (e.g., 404b), and not another neighboring GA (e.g., 404d). The VA may establish wireless network communications with a GA of an adjacent parking space, falsely determining that it has established communication with its target GA. When the VA requests power and does not receive it (because it is in communication with the wrong GA), the VA may not detect the source of the problem. Likewise, the GA of the adjacent parking space may detect a fault because it is attempting to provide power and recognizing no load. This problem may be referred to as "cross-connect." In addition to the primary function of providing power to a vehicle being impossible in a cross-connect situation, additional functions such as PD for guidance and alignment, FOD, and LOD may not operate properly, if at all, when wireless communications are not established between the VA and its target GA.

As previously mentioned, guidance, alignment, and pairing in the example multiple parking space scenario illustrated in FIG. 4 requires the VA (e.g., VA 406a) to disambiguate between the target GA (e.g., GA 404b) and neighboring GAs (e.g., 404a, 404c, 404d, 404e). Pairing for wireless communications (e.g., via WiFi) additionally requires the VA to disambiguate between the GA wireless communication unit (e.g., 446b) associated to the target GA and the GA wireless communication units associated to neighboring GAs. Alternatively, it requires the GA (e.g., 104b) to disambiguate the vehicle (e.g., 402a), attempting for being charged from, from other vehicles (e.g., 402a, 402c) as well as the associated VA wireless communication unit (e.g., 446a) from the VA communication units associated to other vehicles.

Moreover, guidance and alignment may require PD to periodically determine a positional relationship between the vehicle unit (e.g., 430a) and the ground unit (e.g., 420b) in a suitable coordinate system, at a suitable update rate, and over a suitable distance range. In some implementations, the vehicle (e.g., 402a) receives 10 position updates per second for guidance beginning at a distance of 5 m and in a vehicle-based coordinate system with reference to FIG. 3B. At a distance of 1 m, the update rate is increased e.g., to 20 updates per second for alignment.

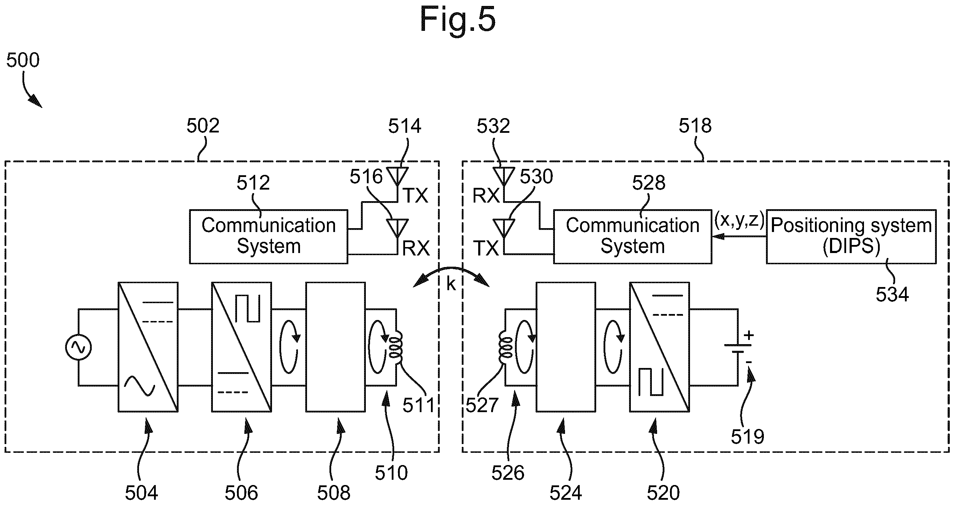

FIG. 5 is a schematic diagram of an exemplary wireless power transfer system 500 in accordance with an aspect of the present disclosure. The exemplary system 500 includes a ground unit 502. The ground unit 502 comprises a power factor correction (PFC)/Buck converter 504 in communication with an electrical grid (not shown), the PFC/Buck converter 504 in communication with a bidirectional converter 506, such that the converter 506 is configured to function as either a rectifier or an inverter (e.g., a half-bridge inverter, a full-bridge inverter). The converter 506 is coupled to a switching circuit (not shown) which may include two or more switches. The switches may be controlled by one or more respective control signals. The converter 506 in the example shown is coupled to impedance matching circuitry 508, which can include, for example, one or more inductive components, and may include one or more capacitive components. The impedance matching circuitry 508 is further coupled to a power transfer coil circuit 510 of the ground unit 502, which includes capacitors (not shown) and an inductor 511.

In the example system 500 shown, the inductor 511 of the power transfer coil circuit 510 is configured to be inductively coupled to an inductor 527 of a power transfer coil 526 of a vehicle unit 518 for the purpose of wireless power transfer. The system 500 further comprises such a vehicle unit 518 comprising power transfer coil circuit 526 having an inductor 527 and capacitors. The power transfer coil circuitry 526 of the vehicle unit 518 is coupled to an impedance matching circuitry 524 which can include, for example, one or more inductive components and one or more capacitive components. In some examples, the impedance matching circuitry 524 may be configured to change one or more characteristics (for example reduce distortions) in a current from the power transfer coil circuitry 526. The impedance matching circuitry 524 is coupled to a switching circuit (not shown) which may include two or more switches. The switches may be controlled by one or more respective control signals. The impedance matching circuitry 524 is coupled to a converter 520 configured to function as either a rectifier or an inverter (e.g., a half-bridge inverter, a full-bridge inverter). The converter 520 is coupled, optionally either directly or indirectly, to an electric vehicle battery 519 of an electric vehicle (not shown).

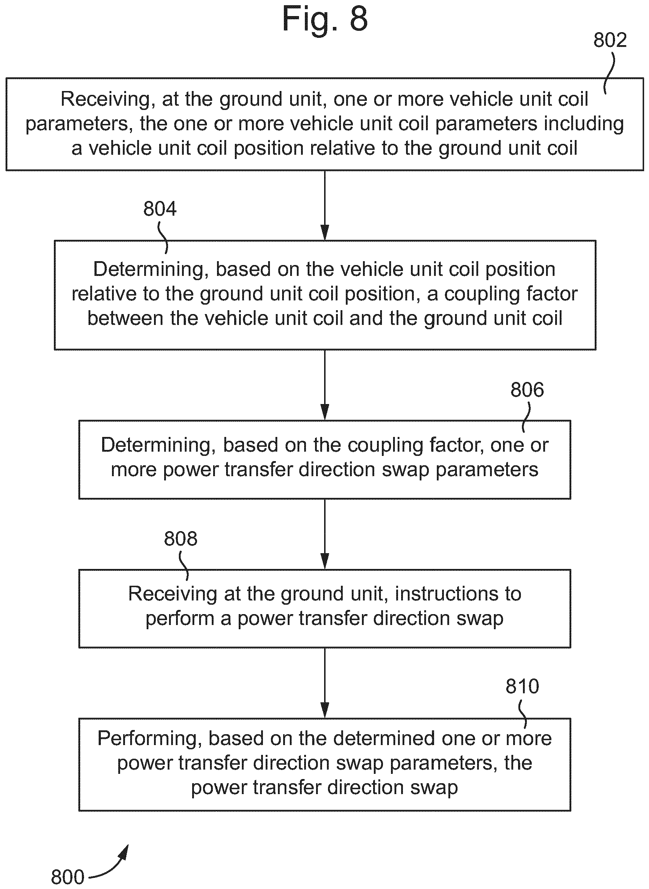

In some examples, the system 500 may further comprise one or more current sensors (not shown) configured to determine (for example by measuring, sensing or detecting) one or more characteristics of a current at the power transfer coil circuitry 510, 526. The current sensors may be positioned at any suitable location within the circuit, and may for example be coupled at the output of the impedance matching circuitry 508, 524 and/or optionally at the input of the converter 506, 520. In some examples, the current sensor may determine the phase of the current ($I_{VA,CONV}$, $I_{GA,CONV}$; referred to in more detail in reference to FIG. 8) at the input of the converter 506, 520. In some examples, the current sensor may include a zero-crossing detector configured to detect zero-crossings by the current, for example the current ($I_{VA}$, $I_{GA}$; referred to in more detail in reference to FIG. 8) at the power transfer coil 511, 527, and output a corresponding sensor signal. The sensor signal may be provided to a processor and/or controller for processing. In some examples, the processor and/or controller may generate control signals (for example pulse-width modulation (PWM) signals) for controlling one or more switches of the switching circuit coupled to the converter 506, 520 based on the current sensor signals. The processor and/or controller may provide the control signals to one or more switches coupled to the converter 506, 520, for example to control the operation of a power transfer direction swap as described. A property of the control signals, for example a pulse width, a duty cycle, a timing or a signal time delay, may be used to adjust a property of the current at the power transfer coil circuit 510, 526 as part of the power transfer direction swap. Any suitable power transfer direction swap parameters may be used as described herein, for example rectifier duty cycle, rectifier delay, inverter duty cycle, inverter delay, ground side DC voltage, battery voltage, coupling factor, inductance of the ground unit and the vehicle unit power transfer coils, a vehicle unit position relative to the ground unit, ground unit type, vehicle unit type, a target power or a target current, a power ramp, timing for shorting components, for example switches, and a time duration (for example a target time duration) before normal operation of the power transfer system is reached.

In use during wireless power transfer, one of the inductors 511, 527 of the power transfer coil circuit 510, 526 of the ground unit 502 or the vehicle unit 518 is configured to generate an oscillating magnetic field, which is configured to induce an oscillating current at the other of the inductors 511, 527. The current can have a frequency within a wireless inductive power transfer frequency band of, for example, 85 kHz to 90 kHz. The inductor 511, 527 which generates the oscillating magnetic field, and thereby acts as the power transmitter during wireless power transfer, depends on the direction of the wireless power transfer. In the case of grid-to-vehicle (G2V) wireless power transfer, the inductor 511 of the ground unit 502 is configured to generate the oscillating magnetic field. In the case of vehicle-to-grid (V2G), vehicle-to-home (V2H) or vehicle-to-power receiver (V2X) wireless power transfer, the inductor 527 of the vehicle unit 518 is configured to generate the oscillating magnetic field. The inverter/rectifier operation of the converters 506, 520 of the ground unit 502 and the vehicle unit 518 is switchable by way of the respective switching circuits coupled thereto (for example in response to dedicated control signals issued to each of the switches), such that the direction of wireless power transfer in the system 500 is switchable. In some examples, at the time instance of such a switching of direction, reactive components such as 511, 527 making up a resonator tank of the power transfer coil circuitry 510, 526 can comprise stored energy which may be useful for optimizing a speed of the power transfer direction switching, thereby further enabling the use of an electric vehicle battery as an uninterrupted power supply for, for example, supply of power to a home. Such stored energy can in some cases, however, also produce electrical artefacts such as current or voltage overshoots. The systems and methods of the present disclosure therefore may make use of one or more power transfer direction swap parameters when performing the power transfer direction swap, the one or more power transfer direction swap parameters configured to minimize or eliminate the occurrence of such electrical artefacts during the power transfer direction switching.

Referring to FIG. 5, the ground unit 502 further comprises a bidirectional communication system 512 comprising a transmitter communication coil 514 and a receiver communication coil 516. The transmitter communication coil 514 and the receiver communication coil 516 may be any suitable communication coil such as that described herein, and in the example shown are configured to communicate on a direct bidirectional communication channel having a frequency band distinct from a frequency band of the inductive wireless power transfer of the power transfer coil 510.

The vehicle unit 518 further comprises a bidirectional communication system 528 comprising a transmitter communication coil 530 and a receiver communication coil 532. The transmitter communication coil 530 and the receiver communication coil 532 may be any suitable communication coil such as that described herein, and in the example shown are configured to communicate on the direct bidirectional communication channel. The vehicle unit 518 further comprises a positioning system 534 configured to engage one or more positioning coils (not shown) of the ground unit to determine position information of the vehicle unit 518 relative to the ground unit 502.

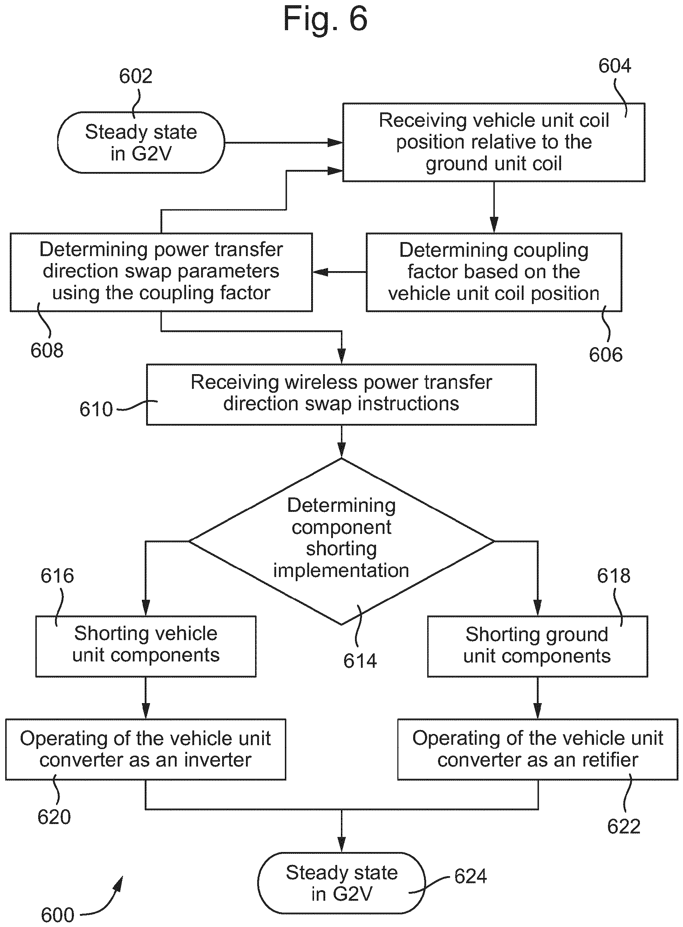

Referring to FIG. 6, a flow chart is shown detailing example method steps of a power direction swap scenario 600 using the wireless power transfer system 500 components of FIG. 5. In the particular example of FIG 6, the system begins operating in a power transfer mode, wirelessly transferring power from the electrical grid to an electric vehicle (G2V) 602 using the system 500. In the G2V power transfer operation, the vehicle unit 518 is in a fixed position above the ground unit 502 within a predefined parking area thereof, such that power transfer is in a steady state 602. During the G2V power transfer operation, the ground unit 502 may communicate with the vehicle unit 518, for example using the respective bidirectional communication systems 512, 528 thereof by way of a bidirectional communication channel such as that described herein. In particular the ground unit 502 may, for example periodically, receive vehicle unit coil position information relative to the ground unit coil 604, and subsequently use the vehicle unit coil position information to determine a coupling factor based on the vehicle unit coil position 606. The ground unit 502 may, based on the determined coupling factor, determine one or more power direction swap parameters 610, for example associated vehicle unit component shorting and ground unit component shorting required for any power transfer direction swap to avoid, for example, voltage and current overshoots. In the example shown, the ground unit 502 receives instructions to perform a wireless power transfer direction swap from G2V to V2G 612. The ground unit 502 may transmit, by way of the transmitter communication coil 514 of the bidirectional communication system 512, the power transfer direction swap parameters to the vehicle unit 518. The vehicle unit 518, based on the received power transfer direction swap parameters, may then determine an implementation protocol 614 for shorting impedance matching circuitry 524 by issuing corresponding control signals to the of the switching circuit of the vehicle unit converter 520 therein. The ground unit 502 may additionally, based on the power transfer direction swap parameters, determine an implementation protocol 614 for shorting impedance matching circuitry 508 by issuing corresponding control signals to the switching components (which in the example shown are field effect transistors) of the switching circuit of the ground unit converter 506 therein. Each of the vehicle unit 518 and the ground unit 502 may then follow the corresponding shorting protocol 616, 618 to short the respective switching components therein according to the power transfer direction swap parameters. For example, the shorting protocol may including timing information based on the power transfer direction swap parameters, which may determine the provision of one or more power transfer direction swap control signals triggered by a zero crossing of the current or alternatively based on the receipt of a control signal at the receiver communication coil of the bidirectional communication system. Following the shorting of the impedance matching circuitry 524 using the control signals issued to the switching circuit of the converter 520 vehicle unit 518, the vehicle unit converter 520 is switched to operate as an inverter 620, and following the shorting of the impedance matching circuitry 508 of the ground unit 502, the ground unit converter 504 is switched to operate as a rectifier 622. As a result, the system 500 reaches a steady state V2G power transfer operation 624.

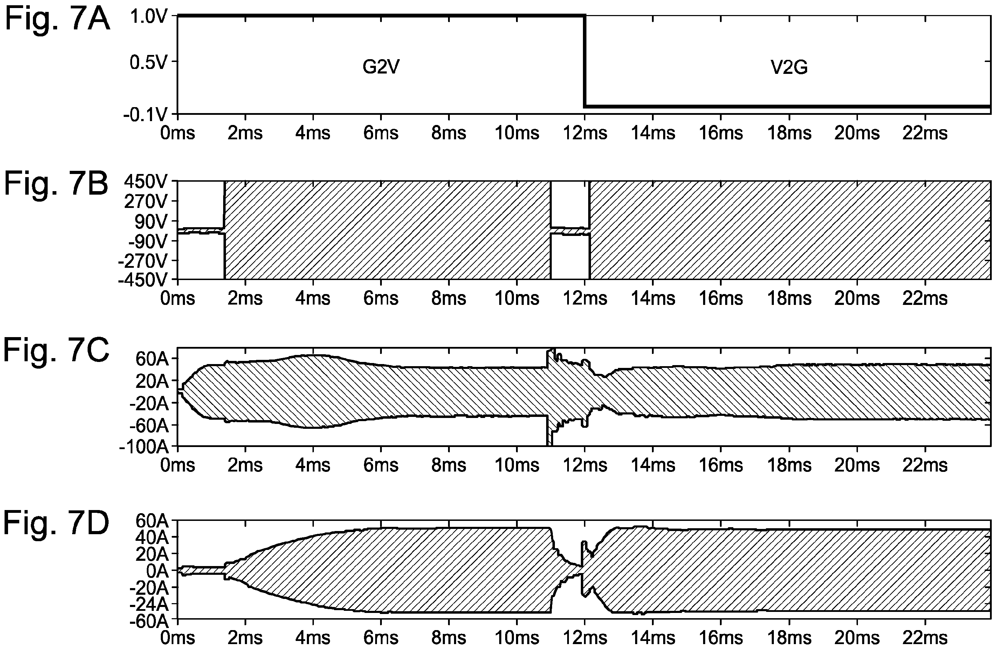

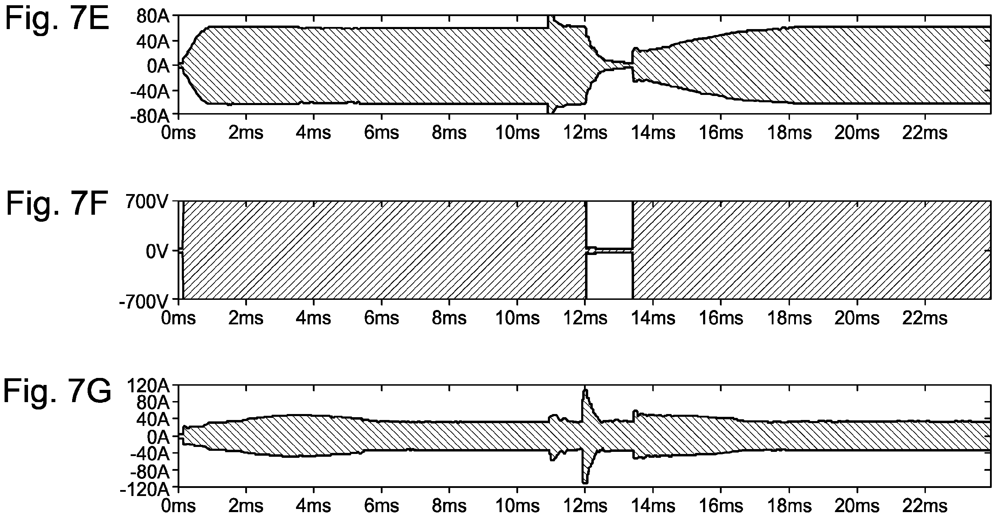

Referring to FIG. 7A to FIG. 7G, shows voltage and current waveforms obtained during a simulation of the power transfer direction swap switching scenario 600 of FIG 6. In particular, FIG. 7A shows the timing of the switch from G2V to V2G; FIG. 7B shows the voltage ($V_{GA,CONV}$) across the ground unit converter 504, FIG. 7C shows the current ($I_{GA,CONV}$) from the ground unit converter 504; FIG. 7D shows the current ($I_{GA}$) at the ground unit power transfer coil 510; FIG. 7E shows the current ($I_{VA}$) at the vehicle unit power transfer coil 526; FIG. 7F shows the voltage ($V_{VA,CONV}$) across the vehicle unit converter 520; and FIG. 7G shows the current ($I_{VA,CONV}$) at the vehicle unit converter 520. As can be seen from FIG. 7A to FIG. 7G, the steady state G2V power transfer operation 602 is reached after 6 ms of the simulation. At 11 ms, the ground unit 502 receives the instructions 612 to perform the power transfer direction swap, and according to the determined shorting protocol 614, shorts the impedance matching circuitry 508 of the ground unit 502. This acts to reduce the stored energy within reactive components of the ground unit 502 resonator circuitry. At 11 ms the vehicle unit 518 can be observed to proceed in a steady state. At 12 ms, the wireless power transfer system 500 begins to power up in the reverse direction, which is a rapid change for the vehicle unit. The vehicle unit 518, in accordance with the determined shorting protocol 614, shorts the impedance matching circuitry 524. At 18 ms, the system 500 can be observed to reach a steady state in the reverse direction (V2G). The full V2G transition occurred between t = 11 ms and t = 18 ms, and hence was performed over a period of 7 ms.

Further modification to reduce voltage or current overshoots may include longer power transfer direction swap period, which may be determined according to adjusted power transfer direction swap parameters, for example by adjusting a resistive impedance parameter, a capacitive impedance parameter or a complex impedance parameter of the ground unit converter or the vehicle unit converter.

In some examples, in G2V mode the current waveforms at the ground unit power transfer coil and the vehicle unit power transfer coil may be as follows:

$$i_{GA}(t) = I_{GA} \sin \omega t \rightarrow i_{VA}(t) = I_{VA} \sin \omega t + \frac{\pi}{2}.$$

In some such cases the vehicle unit power transfer coil current lags that at the ground unit power transfer coil by approximately $\pi/2$. If the direction of power transfer is reversed suddenly, the ground unit the ground unit power transfer coil current may lag that of the vehicle unit power transfer coil current by approximately $\pi/2$, since vehicle unit and the ground unit have switched between load and drain roles. This may mean that, with superposition of currents, either one of the or both power transfer coil currents would change phase. As such, current and voltage overshoots may result, and it may therefore be desirable to dampen the currents first to avoid such overshoots. The process of FIG. 6 performs such dampening by reducing a portion of energy stored in the reactive components of the resonator circuitry of the vehicle unit and ground unit. It will be appreciated that other methods of reducing overshoots may be implemented, and may include reducing pulse width over a period, or adjusting impedance parameters (for example resistive, capacitive or complex impedance parameters). Additionally, by making use of a low latency bidirectional communication system such as that described herein, the power transfer direction swap process can be partitioned more effectively between the ground unit and the vehicle unit.

Referring to FIG. 8, a flow chart is shown detailing steps of an example method 800 of switching a direction of wireless power transfer between a wireless power transfer coil of a vehicle unit and a wireless power transfer coil of a ground unit in accordance with the present disclosure. The method comprises: receiving, at the ground unit, one or more vehicle unit coil parameters, the one or more vehicle unit coil parameters including a vehicle unit coil position relative to the ground unit coil 802; determining, based on the vehicle unit coil position relative to the ground unit coil position, a coupling factor between the vehicle unit coil and the ground unit coil 804; determining, based on the coupling factor, one or more power transfer direction swap parameters 806; receiving at the ground unit, instructions to perform a power transfer direction swap 808; and performing, based on the determined one or more power transfer direction swap parameters, the power transfer direction swap 810. It will be appreciated that the method 800 of FIG. 8 may be performed as part of the method 600 of FIG. 6, and may use any suitable wireless power transfer system such as that disclosed herein.

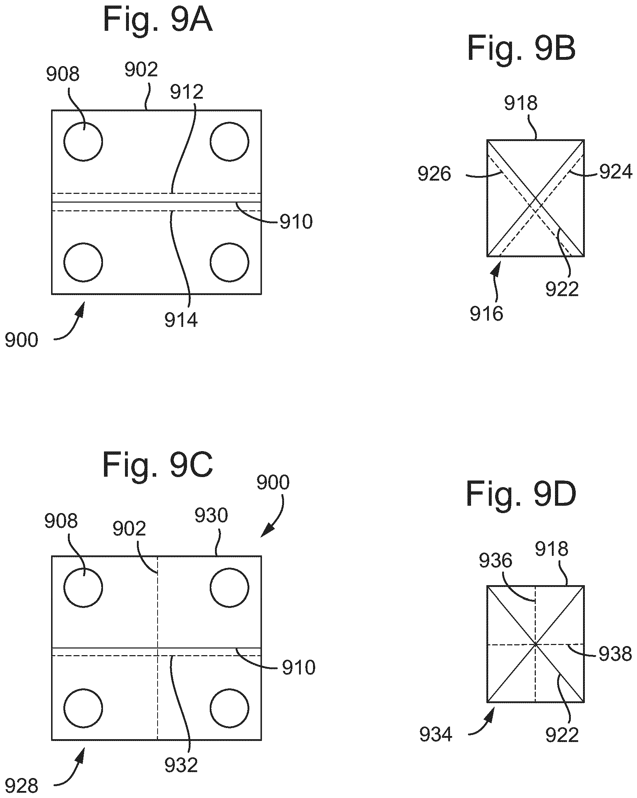

Referring to FIG. 9A, top-down view of an example ground unit 900 is shown in accordance with an aspect the present disclosure. The ground unit 900 may be suitable for use as any ground unit described herein, for example 320 (e.g., 104a of FIG. 1 or 220 of FIG. 2, 320 of FIG. 3A and FIG. 3B, 420 of FIG. 4). The ground unit 900 forms a component part of a wireless power transfer system, such as in accordance with an aspect of the present disclosure, suitable for enabling power transfer between an electric vehicle and a power source or a power drain. The ground unit 900 comprises a rectangular ground pad 902, housing inductive wireless power transfer coils (not shown) In use, the ground unit 900 is configured to be in communication with a power source (such as an electrical grid) or a power drain (such as a home), the power transfer coils being configured to engage with corresponding power transfer coils of a vehicle unit of an electric vehicle, to perform inductive wireless power transfer between the power source or the power drain and the electric vehicle (such as a battery thereof). The inductive wireless power transfer is performed at an inductive wireless power transfer frequency which in the example shown is approximately 85 kHz to 90 kHz.

In the example 900 shown, the rectangular ground pad 902 further houses four short-range positioning coils 908, each of the short-range positioning coils 908 spatially positioned proximate a corresponding corner of the rectangular ground pad 902. The ground pad 902 further houses a long-range positioning coil 910 extending across the width of the ground pad 902 and approximately aligned with a longitudinal axis of the ground pad 902. The short-range and long-range positioning coils 908, 910 form component parts of a positioning system of the wireless power transfer system. The positioning system may be suitable for use as any positioning system described herein (e.g., 228, 238 of FIG. 2). In use, the integrated long-range positioning coil 910 (horizontally polarized), and the four short-range positioning coils 908 (vertically polarized) of the ground unit 900 are configured to generate corresponding magnetic fields configured to be engaged therewith by positioning coils present within a vehicle unit. The short-range and long-range coils 908, 910 of the positioning system provides positioning information within two proximity regions relative to the ground unit 900: a longer range guidance proximity region around the ground unit 900 suitable for providing positioning information by way of the long-range positioning coil 910; and an alignment proximity region located directly above the ground unit 900 and suitable for providing positioning information by way of the short-range coils 908. By way of example, the positioning information provided within the ground unit guidance proximity region may relate to orientation direction of the vehicle unit with respect to magnetic fields generated by the long-range positioning coil 910 of the ground unit 900, and a distance estimation between the vehicle unit and the ground unit 900. In the alignment proximity region, the positioning information may provide a confirmation of whether or not the vehicle unit is located within a specified allowed parking region above the ground unit 900, which may include a tolerance zone.

In addition to the power transfer coils, and the positioning coils 908, 910, the ground unit 900 further comprises communication coils comprising a transmitter communication coil 912 and a receiver communication coil 914. In the example shown, the transmitter communication coil 912 and the receiver communication coil 914 extend across the width of the ground pad 902 parallel to, but on either side of, positioning coil 910. It will be appreciated that in some examples, the transmitter communication coil 912 and the receiver communication coil 914 may be co-located with positioning coil 910. The transmitter and receiver coils 912, 914 are configured to communicate with corresponding coils of the vehicle unit by way of a bidirectional communication channel operating on a frequency band which is different to the inductive wireless power transfer frequency band of approximately 85 kHz to 90 kHz. Since the bidirectional communication channel on which the transmitter and receiver communication coils 912, 914 are configured to communicate operates on a different frequency band to the inductive wireless power transfer frequency band, communication from the transmitter communication coil 912 and to the receiver communication coil 914 may occur at the same time as that during which the power transfer coils engage in inductive wireless power transfer.

Such simultaneous operation of the bidirectional communication channel and the inductive wireless power transfer may enable communication of information relating to the inductive wireless power transfer to or from the ground unit 900 during the power transfer. Such operability may permit communication of information relating to a power transfer direction swap instructions received at the ground unit 900, instructing a swap between a grid-to-vehicle (G2V) wireless power transfer state and either a vehicle-to-grid (V2G) or vehicle-to-home (V2H) power transfer state. In examples wherein direct communication between the transmitter and receiver communication coils 912, 914 and corresponding receiver and transmitter communication coils of the vehicle unit, such as by way of a short-range or near-field communication frequency band, latency associated with such communication may be minimized. The information communicated by way of such as bidirectional communication channel may, for example, include power transfer direction swap parameters which may inform on the manner of performing the power transfer direction swap, such as to minimize the occurrence of any electrical artefacts associated with the power transfer direction swap, such as those associated with stored energy comprised within a resonator tank of the GAR as described herein. The speed of communication permitted by a direct communication on such a bidirectional communication channel may permit a power transfer direction swap at very short time-scales. At such short time-scales, performing a power transfer direction swap may result in a higher likelihood of such electrical artefacts, for example current or voltage overshoots, during the power transfer direction swap. An ability to communicate power transfer direction swap parameters which inform the manner of performing the power transfer direction swap during the operation of the power transfer coils may therefore allow the power transfer direction swap to account for the most recent state of the power transfer coils, such that the occurrence of artefacts associated with the swap are minimized.

Referring to FIG. 9B, a top-down view of an example vehicle unit 916 is shown. Together the ground unit 900 of FIG. 9A and the vehicle unit 916 of FIG. 9B may form components of a wireless power transfer system in accordance with an aspect the present disclosure. The vehicle unit 916 comprises a rectangular vehicle pad 918 housing power transfer coils. In use, the power transfer coils of the vehicle unit are configured to engage in inductive wireless power transfer with the power transfer coils of the ground unit 900 on the inductive wireless power transfer frequency band, which in the example described is approximately 85 kHz to 90 kHz.

The vehicle unit further comprises two positioning coils 922 extending between diagonally opposing vertices of the vehicle pad 918, and configured to engage with the magnetic fields generated by the positioning coils 908, 910 of the ground unit 900 to provide vehicle unit positioning information relative to the ground unit 900.

The vehicle unit further comprises a transmitter communication coil 924 and a receiver communication coil 926, each extending approximately between opposing diagonal corners of the rectangular vehicle pad 918 and parallel to a corresponding positioning coil 922. It will be appreciated that in some examples the transmitter communication coil 924 and the receiver communication coil 926 may be co-located with the positioning coil 922. The transmitter communication coil 924 of the vehicle unit 916 is configured to transmit signals on the bidirectional communication channel directly to the receiver communication coil 914 of the ground unit 900 on the short-range or near-field frequency band distinguished from the inductive wireless power transfer frequency band. The receiver communication coil 926 of the vehicle unit 916 is configured to receive signals on the bidirectional communication channel directly from the transmitter communication coil 912 of the ground unit 900 on the short-range or near-field frequency band. Such direct communication permitted between the corresponding transmitter communication coils 912, 924 and the receiver communication coils 914, 926 on the bidirectional communication channel may act to minimize latency associated with the communication such that the speed with which a power transfer direction swap is performed is optimized. Performing the power transfer direction swap at such short time scales may be required to optimize use of an electrical vehicle battery as an uninterrupted power supply for applications such as vehicle-to-home (V2H) power transfer.

Referring to FIG. 9C, a top-down view of an alternate example of a ground unit 928 is shown. The alternate example 928 is substantially in line with the example 900 of FIG. 9A and for clarity and consistency the same numbering is used. In particular, as with the example 900 of FIG. 9A, the ground unit 928 comprises a rectangular ground pad 902, housing inductive wireless power transfer coils (not shown) In use, and as with the example of FIG. 9A, the ground unit 928 is configured to be in communication with a power source (such as an electrical grid) or a power drain (such as a home), the power transfer coils being configured to engage with corresponding power transfer coils of a vehicle unit of an electric vehicle, to perform inductive wireless power transfer between the power source or the power drain and the electric vehicle (such as a battery thereof). The inductive wireless power transfer is performed at an inductive wireless power transfer frequency which in the example shown is approximately 85 kHz to 90 kHz.

In the alternate example 928 shown, and as with the example 900 of FIG. 9A, the rectangular ground pad 902 further houses four short-range positioning coils 908, each of the short-range positioning coils 908 spatially positioned proximate a corresponding corner of the rectangular ground pad 902. The ground pad 902 further houses a long-range positioning coil 910 extending across the width of the ground pad 902 and approximately aligned with a longitudinal axis of the ground pad 902. The short-range and long-range positioning coils 908, 910 form component parts of a positioning system of the wireless power transfer system. The positioning system may be suitable for use as any positioning system described herein (e.g., 228, 238 of FIG. 2). In use, the long-range positioning coil 910 (horizontally polarized), and the four short-range positioning coils 908 (vertically polarized) of the ground unit 900 are configured to generate corresponding magnetic fields configured to be engaged therewith by positioning coils present within a vehicle unit. The short-range and long-range coils 908, 910 of the positioning system provides positioning information within two proximity regions relative to the ground unit 928: a longer range guidance proximity region around the ground unit 928 suitable for providing positioning information by way of the long-range positioning coil 910; and an alignment proximity region located directly above the ground unit 928 and suitable for providing positioning information by way of the short-range coils 908. By way of example, the positioning information provided within the ground unit guidance proximity region may relate to orientation direction of the vehicle unit with respect to magnetic fields generated by the long-range positioning coil 910 of the ground unit 928, and a distance estimation between the vehicle unit and the ground unit 928. In the alignment proximity region, the positioning information may provide a confirmation of whether or not the vehicle unit is located within a specified allowed parking region above the ground unit 928, which may include a tolerance zone.

In addition to the power transfer coils, and the positioning coils 908, 910, the ground unit 928 further comprises communication coils comprising a transmitter communication coil 930 and a receiver communication coil 932. Alternatively to the example 900 of FIG. 9A, in the example 928 shown, the transmitter communication coil 930 extends across the height of the ground pad 902, and the receiver communication coil 932 extends orthogonally to the transmitter communication coil 930, across the width of the ground pad 902 parallel to the positioning coil 910. It will be appreciated that in some examples, the receiver communication coil 914 may be co-located with positioning coil 910. It will also be appreciated that in some examples the positioning of the transmitter communication coil 930 and the receiver communication coil 932 may be switched. As with the example 900 of FG. 9A, the transmitter and receiver coils 930, 932 are configured to communicate with corresponding coils of the vehicle unit by way of a bidirectional communication channel operating on a frequency band which is different to the inductive wireless power transfer frequency band of approximately 85 kHz to 90 kHz. As with the example 900 of FIG 9A, since the bidirectional communication channel on which the transmitter and receiver communication coils 930, 932 are configured to communicate operates on a different frequency band to the inductive wireless power transfer frequency band, communication from the transmitter communication coil 930 and to the receiver communication coil 932 may occur at the same time as that during which the power transfer coils engage in inductive wireless power transfer. It will be appreciated that the different conformation of the transmitter and receiver coils 930, 932 of the example of FIG. 9C may serve the same operational benefits of the example 900 described in relation to FIG. 9A.

Referring to FIG. 9D, a top-down view of an alternate example vehicle unit 934 is shown. The alternate example 934 is substantially in line with the example 916 of FIG. 9B and for clarity and consistency the same numbering is used. In particular, as with the example 916 of FIG. 9B, together the ground unit 928 of FIG. 9C and the vehicle unit 934 of FIG. 9D may form components of a wireless power transfer system in accordance with an aspect the present disclosure. The vehicle unit 934 comprises a rectangular vehicle pad 918 housing a power transfer coil (not shown). In use, the power transfer coil of the vehicle unit 934 is configured to engage in inductive wireless power transfer with the power transfer coils of the ground unit 928 on the inductive wireless power transfer frequency band, which in the example described is approximately 85 kHz to 90 kHz.

The vehicle unit 934 further comprises two positioning coils 922 extending between diagonally opposing vertices of the vehicle pad 918, and configured to engage with the magnetic fields generated by the positioning coils 908, 910 of the ground unit 928 to provide vehicle unit positioning information relative to the ground unit 928.

The vehicle unit 934 further comprises a transmitter communication coil 936 extending across the height of the vehicle pad 918 and positioned approximately centrally therein, and a receiver communication coil 938 extending orthogonally to the transmitter communication coil 924 across the width of the vehicle pad 918 and positioned approximately centrally therein. It will be appreciated that in some examples the positioning of the transmitter communication coil 936 and the receiver communication coil 938 may be switched. The transmitter communication coil 936 of the vehicle unit 934 is configured to transmit signals on the bidirectional communication channel directly to the receiver communication coil 932 of the ground unit 928 on the short-range or near-field frequency band distinguished from the inductive wireless power transfer frequency band. The receiver communication coil 938 of the vehicle unit 934 is configured to receive signals on the bidirectional communication channel directly from the transmitter communication coil 930 of the ground unit 928 on the short-range or near-field frequency band. Such direct communication permitted between the corresponding transmitter communication coils 930, 936 and the receiver communication coils 932, 938 on the bidirectional communication channel may act to minimize latency associated with the communication such that the speed with which a power transfer direction swap is performed is optimized. Performing the power transfer direction swap at such short time scales may be required to optimize use of an electrical vehicle battery as an uninterrupted power supply for applications such as vehicle-to-home (V2H) power transfer.

While the positioning of the communication coils of the vehicle unit may permit optimal coupling with the communication coils of the ground unit in the examples described, it will be appreciated that use of the vehicle unit with any suitable ground unit (such as those described herein) is intended, and that the use of the ground unit with any suitable vehicle unit (such as those described herein) is intended.

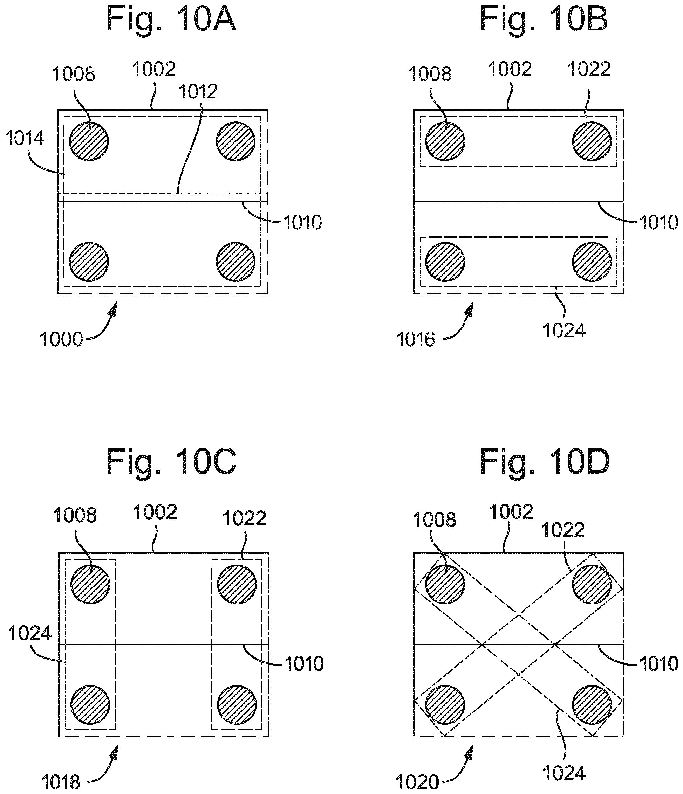

Referring to FIG. 10A to FIG. 10D, top-down views of further example ground units are shown which are in line with the examples 900, 928 described in relation to FIG. 9A and FIG. 9C, and incorporate power transfer coils, positioning coils, and communications coils such that the ground units of FIG. 10A to FIG. 10D are operationally the same as the examples 900, 928 previously described, and the where appropriate the same numbering is used for consistency and clarity. In particular, in the example 1000 of FIG. 10A, the ground unit 1000 comprises a rectangular ground pad 1002, housing inductive wireless power transfer coils.

In the example 1000 shown, the ground pad 1002 further houses four short-range positioning coils 1008, each of the short-range positioning coils 1008 spatially positioned proximate a corresponding corner of the rectangular ground pad 1002. The ground pad 1002 further houses a long-range positioning coil 1010 extending across the width of the ground pad 1002 and approximately aligned with a longitudinal axis of the ground pad 1002. The short-range and long-range positioning coils 1008, 1010 form component parts of a positioning system of the wireless power transfer system. The positioning system may be suitable for use as any positioning system described herein (e.g., 228, 238 of FIG. 2).

In addition to the power transfer coils, and the positioning coils 1008, 1010, the ground unit 1000 further comprises communication coils comprising a transmitter communication coil 1012 and four receiver communication coils 1014 (indicated by the shading). In the example shown, the transmitter communication coil 1012 extends across the width of the ground pad 1002 parallel to the positioning coil 1010. It will be appreciated that in some examples, the transmitter communication coil 1012 may be co-located with the positioning coil 1010. The four receiver communication coils 1014 are each co-located with a corresponding one of the short-range positioning coils 1008. As with the previously-described examples 900, 928, the transmitter and receiver coils 1012, 1014 are configured to communicate with corresponding coils of the vehicle unit by way of a bidirectional communication channel operating on a frequency band which is different to the inductive wireless power transfer frequency band of approximately 85 kHz to 90 kHz.

Referring to the alternate examples 1016, 1018, 1020 of FIG. 10B, FIG. 10C and FIG. 10D, the power transfer coils and the positioning coils 1008, 1010 are the same as for the example 1000 of FIG. 10A. In the alternate examples 1016, 1018, 1020, the ground unit 1016, 1018, 1020 comprises two transmitter communication coils 1022 positionally co-located with two of the four short-range positioning coils 1008, and two receiver communication coils 1024 positionally co-located with the other two of the four short-range positioning coils 1008. In the particular examples 1016, 1018 of FIG. 10B and FIG. 10C, the two transmitter communication coils 1022 are co-located with power transfer and position coils 1004, 1008 on a common side of the ground pad 1002, and the two receiver communication coils 1024 are co-located with positioning coils 1008 on the opposing side of the ground pad 1002. In the example 1020 of FIG. 10D, the two transmitter communication coils 1022 are co-located with positioning coils 1008 positioned in a diagonally opposing pair of corners of the ground pad 1002, and the two receiver communication coils 1024 are co-located with positioning coils 1008 positioned on the other diagonally opposing pair of corners of the ground pad 1002. Functionally, the transmitter communication coils 1022 and the receiver communication coils 1024 operate in the same manner as those described for previous examples.

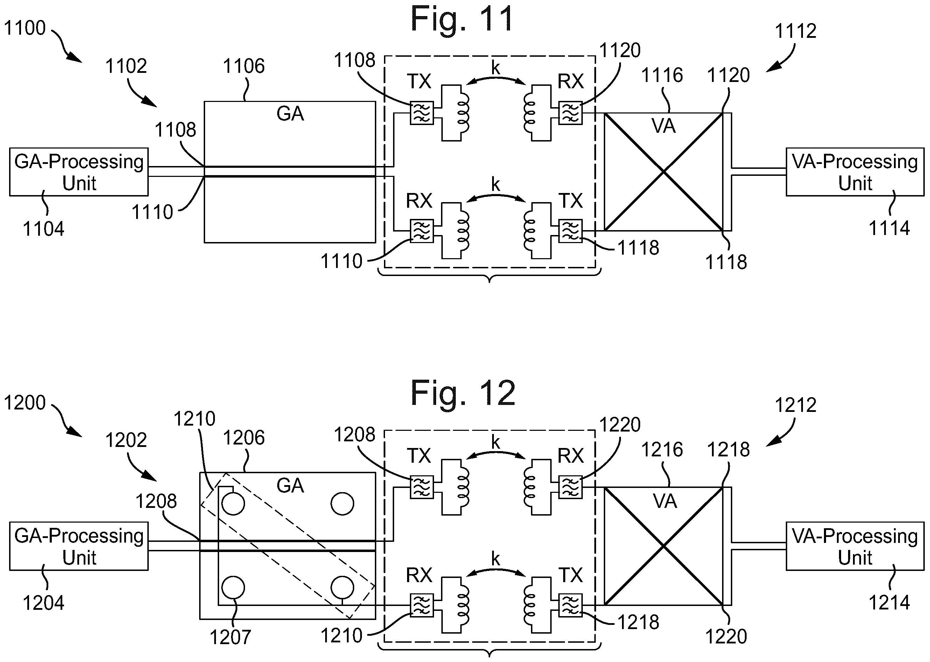

Referring to the FIG. 11, a schematic view of a wireless power transfer system 1100 is shown in accordance with an aspect of the present disclosure. The wireless power transfer system 1100 comprises a ground assembly 1102 comprising a ground assembly processing module 1104 in communication with a ground unit 1106. The ground unit 1106 of the ground assembly 1102 is substantially as described in relation to the example 900 of FIG. 9A. In particular, the ground unit 1106 comprises power transfer and positioning coils (not shown) as described for the example 900 of FIG. 9A, and a transmitter communication coil 1108 and a receiver communication coil 1110 positioned extending across the width of the rectangular ground pad of the ground unit 1106. The ground unit processing module 1104 is in communication with each of the transmitter communication coil 1108 and the receiver communication coil 1110 and is configured to transmit signals on the bidirectional communication channel by way of the transmitter communication coil 1108 and receive signals on the bidirectional communication channel by way of the receiver communication coil 1110. The wireless power transfer system 1100 further comprises a vehicle assembly 1112 comprising a vehicle assembly processing module 1114 in communication with a vehicle unit 1116. The vehicle unit 1116 of the vehicle assembly 1112 is substantially as described in relation to the example 916 of FIG. 9B. In particular, the vehicle unit 1116 comprises power transfer and positioning coils (not shown) as described for the example 916 of FIG. 9B, and a transmitter communication coil 1118 and a receiver communication coil 1120 each extending across the rectangular vehicle pad of the vehicle unit 1116 between a corresponding pair of diagonally opposing corners thereof. The vehicle unit processing module 1114 is in communication with each of the transmitter communication coil 1118 and the receiver communication coil 1120 and is configured to transmit signals on the bidirectional communication channel by way of the transmitter communication coil 1118 and receive signals on the bidirectional communication channel by way of the receiver communication coil 1120.

As shown in FIG. 11, a coupling factor k is defined between the transmitter communication coil 1108 of the ground unit 1106 and the receiver communication coil 1120 of the vehicle unit, and between the transmitter communication coil 1118 of the vehicle unit 1116 and the receiver communication coil 1110 of the ground unit 1106. The coupling factor k defines the strength of the coupling between the corresponding pairs of communication coils. In some examples, the ground unit 1406 may comprise a predefined parking region, the predefined parking region defining a region of the ground pad on which optimal wireless power transfer can occur between the ground unit 1106 and the vehicle unit 1116. The positioning of FIG. 11 may be chosen to provide a high coupling factor k across the predefined parking region. The spatial positioning of the transmitter communication coil 1118 of the vehicle unit 1116 and the receiver communication coil 1110 of the ground unit 1106 of FIG. 11 may be chosen to provide a high coupling factor k across the predefined parking region.

Referring to the FIG. 12, a schematic view of an alternate example wireless power transfer system 1200 is shown in accordance with an aspect of the present disclosure. The wireless power transfer system 1200 is similar to the wireless power transfer system 1100 of FIG. 11, and comprises a ground assembly 1202 comprising a ground assembly processing module 1204 in communication with a ground unit 1206. In line with the example 900 of FIG. 9A, the ground unit 1206 of the ground assembly 1202 comprises power transfer coils (not shown), four short-range positioning coils 1207 and a long-range positioning coil (not shown). The ground unit 1206 further comprises two receiver communication coils 1210 co-located with two short-range positioning coils 1207 located at diagonally opposing corners of the ground pad. The ground unit 1206 further comprises a transmission communication coil 1208 positioned extending across the width of the rectangular ground pad of the ground unit 1206. The ground unit processing module 1204 is in communication with each of the transmitter communication coil 1208 and the receiver communication coils 1210 and is configured to transmit signals on the bidirectional communication channel by way of the transmitter communication coil 1208 and receive signals on the bidirectional communication channel by way of the receiver communication coils 1210.

The wireless power transfer system 1200 further comprises a vehicle assembly 1212 comprising a vehicle assembly processing module 1214 in communication with a vehicle unit 1216 substantially the same as the vehicle unit 1106 described in relation to FIG. 11, and the example 916 of FIG. 9B. In particular, the vehicle unit 1216 comprises power transfer and positioning coils (not shown) as described for the example 916 of FIG. 9B, and a transmitter communication coil 1218 and a receiver communication coil 1220 each extending across the rectangular vehicle pad of the vehicle unit 1216 between a corresponding pair of diagonally opposing corners thereof. The vehicle unit processing module 1214 is in communication with each of the transmitter communication coil 1218 and the receiver communication coil 1220 and is configured to transmit signals on the bidirectional communication channel by way of the transmitter communication coil 1218 and receive signals on the bidirectional communication channel by way of the receiver communication coil 1220.

As shown in FIG. 12, a coupling factor k is defined between the transmitter communication coil 1208 of the ground unit 1206 and the receiver communication coil 1220 of the vehicle unit, and between the transmitter communication coil 1218 of the vehicle unit 1216 and the receiver communication coils 1210 of the ground unit 1206. The coupling factor k defines the strength of the coupling between the corresponding pairs of communication coils. In some examples, the ground unit 1206 may comprise a predefined parking region, the predefined parking region defining a region of the ground pad on which optimal wireless power transfer can occur between the ground unit 1206 and the vehicle unit 1216. The spatial positioning of the transmitter communication coil 1208 of the ground unit 1206 and the receiver communication coil 1218 of the vehicle unit 1216 of FIG. 12 may be chosen to provide a high coupling factor k across the predefined parking region.

The co-location of the receiver communication coils 1210 with the short-range positioning coils 1207 could in some cases lead to effects between signal polarity of signals received by the receiver communication coils 1210 during operation of the positioning coils 1207. In some examples, the signal polarity of one of the receiver communication coils 1210 may be inverted, for example due to the direction of flux originating from the vehicle unit transmitter communication coil 1218, when the vehicle unit 1216 is located within the predefined parking region 1222. In some examples, switching the signal polarity in this manner may improve the coupling factor k.

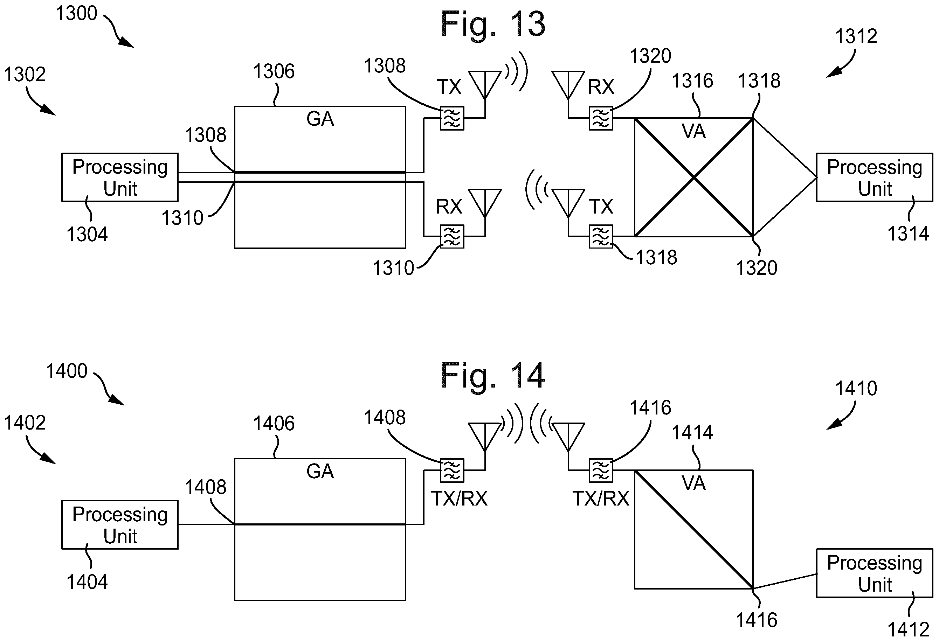

FIG. 13 and FIG. 14 represent further examples of power transfer systems in accordance with the present disclosure, and in particular show examples making use of radio frequency communication antennas for implementing the bidirectional communication channel of the present disclosure, compared with the bidirectional communication channel of the examples of FIG. 11 and FIG. 12 which make use of inductive coupling. Referring to the example of FIG. 13, a schematic view of a wireless power transfer system 1300 is shown in accordance with an aspect of the present disclosure. The wireless power transfer system 1300 comprises a ground assembly 1302 comprising a ground assembly processing module 1304 in communication with a ground unit 1306. The ground unit 1306 of the ground assembly 1302 is substantially as described in relation to the example 900 of FIG. 9A. In particular, the ground unit 1306 comprises power transfer and positioning coils (not shown) as described for the example 900 of FIG. 9A, and a transmitter communication antenna 1308 and a receiver communication antenna 1310 positioned extending across the width of the rectangular ground pad of the ground unit 1306. The ground unit processing module 1304 is in communication with each of the transmitter communication antenna 1308 and the receiver communication antenna 1310 and is configured to transmit signals on the bidirectional communication channel by way of the transmitter communication antenna 1308 and receive signals on the bidirectional communication channel by way of the receiver communication antenna 1310. The wireless power transfer system 1300 further comprises a vehicle assembly 1312 comprising a vehicle assembly processing module 1314 in communication with a vehicle unit 1316. The vehicle unit 1316 of the vehicle assembly 1312 is substantially as described in relation to the example 916 of FIG. 9B. In particular, the vehicle unit 1316 comprises power transfer and positioning coils (not shown) as described for the example 916 of FIG. 9B, and a transmitter communication antenna 1318 and a receiver communication antenna 1320 each extending across the rectangular vehicle pad of the vehicle unit 1316 between a corresponding pair of diagonally opposing corners thereof. The vehicle unit processing module 1314 is in communication with each of the transmitter communication antenna 1318 and the receiver communication antenna 1320 and is configured to transmit signals on the bidirectional communication channel by way of the transmitter communication antenna 1318 and receive signals on the bidirectional communication channel by way of the receiver communication antenna 1320.

Referring to the example of FIG. 14, a schematic view of a wireless power transfer system 1400 is shown in accordance with an aspect of the present disclosure. The wireless power transfer system 1400 comprises a ground assembly 1402 comprising a ground assembly processing module 1404 in communication with a ground unit 1406. The ground unit 1406 of the ground assembly 1402 is substantially as described in relation to the example 900 of FIG. 9A. In particular, the ground unit 1406 comprises power transfer and positioning coils (not shown) as described for the example 900 of FIG. 9A. Unlike the example of FIG. 9A, the ground unit 1406 of the example of FIG. 14 comprises a transceiver 1408 comprising a single transceiver communication antenna 1408 configured for transmitting and receiving communication signals, the transceiver antenna 1408 positioned extending across the width of the rectangular ground pad of the ground unit 1406. The ground unit processing module 1404 is in communication with the transceiver antenna 1408 and is configured to transmit and receive signals on the bidirectional communication channel by way of the transceiver antenna 1408. The wireless power transfer system 1400 further comprises a vehicle assembly 1410 comprising a vehicle assembly processing module 1412 in communication with a vehicle unit 1414. The vehicle unit 1414 of the vehicle assembly 1410 is substantially as described in relation to the example 916 of FIG. 9B. In particular, the vehicle unit 1414 comprises power transfer and positioning coils (not shown) as described for the example 916 of FIG. 9B. Unlike the example of FIG. 9B, the vehicle unit 1414 of the example of FIG. 14 comprises a single transceiver communication antenna 1416 extending across the rectangular vehicle pad of the vehicle unit 1414 between a corresponding pair of diagonally opposing corners thereof. The vehicle unit processing module 1412 is in communication with the transceiver antenna 1416 and is configured to transmit and receive signals on the bidirectional communication channel by way of the transceiver antenna 1416.

Examples will be appreciated wherein the bidirectional communication channel of the present disclosure is implemented using any suitable combination of inductive coupling coils and communication antennas.

Further examples will be appreciated which do not depart from the scope of the present disclosure. Any suitable combination of the features described herein may be incorporated into examples while remaining within the scope of the appended claims. While examples are shown wherein the ground unit and the vehicle unit each comprise corresponding transmitter and receiver coils, examples will be appreciated wherein the ground unit (and optionally the vehicle unit) comprises only a single communication coil configured for both transmitting and receiving signals by way of the bidirectional communication channel. In such examples, any appropriate use of a transmitting or receiving mode switching feature, frequency diplexing or multiplexing, time divisional multiplexing or code-divisional multiplexing may be implemented to permit such bidirectional communication. It will be appreciated that in examples wherein the bidirectional communication channel is implemented using one or more communication coils, the example may be implemented using one or more communication antennas replacing one or more of the communication coils. As such, discussion herein of a communication coil is considered synonymous with a communication antenna. A filter, such as a notch filter or higher order high pass filter may be used to isolate the frequency band occupied by the bidirectional communication channel from the inductive wireless power transfer frequency band.

Particular embodiments of the disclosure are set forth in the following numbered paragraphs:

1. A method of switching a direction of wireless power transfer between a wireless power transfer coil of a vehicle unit and a wireless power transfer coil of a ground unit, the method comprising:

receiving at the ground unit, using control circuitry, one or more vehicle unit coil parameters, the one or more vehicle unit coil parameters including a vehicle unit coil position relative to the ground unit coil; determining, using control circuitry, based on the vehicle unit coil position relative to the ground unit coil position, a coupling factor between the vehicle unit coil and the ground unit coil;

determining, using control circuitry, based on the coupling factor, one or more power transfer direction swap parameters; receiving at the ground unit, using control circuitry, instructions to perform a power transfer direction swap; and performing, using control circuitry, based on the determined one or more power transfer direction swap parameters, the power transfer direction swap.

2. The method of paragraph 1, wherein the one or more vehicle unit coil parameters further comprises one or more selected from: a vehicle unit coil inductance; a vehicle unit coil quality factor; a vehicle unit coil physical characteristic; a number of vehicle unit coil turns; a vehicle unit coil core permeability; a vehicle unit coil cross-sectional area; a vehicle unit coil length; a vehicle unit coil radius.

3. The method of paragraph 1 or paragraph 2, wherein determining the coupling factor further comprises: accessing one or more ground unit coil parameters and performing the power transfer direction swap using the ground unit coil parameters.

4. The method of paragraph 3, wherein the one or more ground unit coil parameters defines a ground unit coil type.

5. The method of paragraph 3 or paragraph 4, wherein the one or more ground unit coil parameters comprises one or more selected from: a ground unit coil inductance; a ground unit coil quality factor; a ground unit coil physical characteristic; a number of ground unit coil turns; a ground unit coil core permeability; a ground unit coil cross-sectional area; a ground unit coil length; a ground unit coil radius.

6. The method of paragraph 3, paragraph 4 or paragraph 5, wherein determining the coupling factor further comprises: calculating, based on the vehicle unit coil position and the ground unit coil position, a relative position of the vehicle unit coil and the ground unit coil, the relative positions each comprising an X-component, a Y-component, and a Z-component.

7. The method of paragraph 6, wherein the relative positions each further comprise an angular rotation.

8. The method of paragraph 6 or paragraph 7, wherein determining the coupling factor further comprises: determining, based on the relative position of the vehicle unit coil and the ground unit coil, a distance between the vehicle unit coil and the ground unit coil, the distance having a Z component.

9. The method of paragraph 6, paragraph 7 or paragraph 8, wherein determining the coupling factor further comprises: determining, based on the relative position of the vehicle unit coil and the ground unit coil, or the distance, a mutual inductance of the vehicle unit coil and the ground unit coil.

10. The method of paragraph 9, wherein the one or more vehicle unit coil parameters further includes a vehicle unit coil inductance, and wherein determining the coupling factor further comprises: accessing a ground unit coil inductance; and calculating the coupling factor based on the mutual inductance, the vehicle unit coil inductance and the ground unit coil inductance.

11. The method of any one of paragraphs 1 to 10, wherein the method further comprises: detecting that the vehicle unit coil position has changed; calculating, in response to the detection, an updated vehicle unit coil position; and determining, based on the updated vehicle unit coil position and the ground unit coil position, an updated coupling factor between the vehicle unit coil and the ground unit coil; wherein calculating the one or more power transfer direction swap parameters is based on the updated coupling factor.

12. The method of any one of paragraphs 1 to 11, wherein performing the power transfer direction swap comprises: reducing at least a portion of stored energy in at least one reactive component of the ground unit coil.

13. The method of any one of paragraphs 1 to 12, wherein performing the power transfer direction swap comprises: reducing at least a portion of stored energy in at least one reactive component of the vehicle unit coil.

14. The method of paragraph 12 or paragraph 13, wherein the one or more power transfer direction swap parameters comprise one or more selected from: a stored energy in the at least one reactive component of the ground unit coil; a stored energy in the at least one reactive component of the vehicle unit coil.

15. The method of paragraph 12, paragraph 13 or paragraph 14, wherein reducing at least a portion of the stored energy comprises: reducing a pulse width or duty cycle of one or more ground unit coil control signals or one or more vehicle unit coil control signals; and wherein the one or more power transfer direction swap parameters comprise one or more selected from: the pulse width of the one or more ground unit coil control signals; the duty cycle of the one or more ground unit coil control signals; the pulse width of the one or more vehicle unit coil control signals; the duty cycle of the one or more vehicle unit coil control signals.

16. The method of any one of paragraphs 12 to 15, wherein reducing at least a portion of the stored energy comprises: adjusting a resistive impedance parameter and a capacitive impedance parameter of the vehicle unit or the ground unit; and wherein the one or more power transfer direction swap parameters comprise one or more selected from: the a resistive impedance parameter of the vehicle unit; the capacitive impedance parameter of the vehicle unit; the resistive impedance parameter of the ground unit; the capacitive impedance parameter of the ground unit.

17. The method of any one of paragraphs 12 to 16, wherein reducing at least a portion of the stored energy comprises: shorting at least one component selected from: a component of the ground unit; a component of the vehicle; and wherein the one or more power transfer direction swap parameters comprise one or more selected from.

18. The method of any one of paragraphs 1 to 17, wherein performing the power transfer direction swap comprises: ceasing a ground unit coil current across the ground unit and a vehicle unit coil current across the vehicle unit coil; and reestablishing the ground unit coil current and the vehicle unit coil current; wherein following the reestablishment, the ground unit coil current and the vehicle unit coil current is configured to reach a corresponding steady state.

19. The method of paragraph 18, wherein the ground unit coil current and the vehicle unit coil current are configured to reach the steady state following a reestablishment period, wherein the reestablishment period is less than.

20. The method of paragraph 19, wherein during the reestablishment period, the ground unit coil current remains below a ground unit coil current threshold, and the vehicle unit coil current remains below a vehicle unit coil current threshold.

21. The method of any one of paragraphs 1 to 20, wherein prior to receiving the one or more vehicle unit coil parameters, the method further comprises: performing an initial power transfer direction swap for determining one or more calibration parameters.

22. The method of any one of paragraphs 1 to 21, wherein performing the power transfer direction swap comprises: communicating at least one of the power transfer direction swap parameters to the vehicle unit to control a portion of the power direction swap performed by the vehicle unit.

23. The method of paragraph 22, wherein communicating the at least one of the power transfer direction swap parameters to the vehicle is performed using a bi-directional communication channel, the bi-directional communication channel operating on a channel frequency band different to a inductive power transfer frequency band of the power transfer.

24. A method of switching a direction of wireless power transfer between a wireless power transfer coil of a vehicle unit and a wireless power transfer coil of a ground unit, the method comprising: receiving at the ground unit, using control circuitry, one or more vehicle unit coil parameters, the one or more vehicle unit coil parameters including a vehicle unit coil position relative to the ground unit coil, and a vehicle unit coil inductance; determining, using control circuitry, based on the vehicle unit coil position relative to the ground unit coil, a mutual inductance between the vehicle unit coil and the ground unit coil; determining, using control circuitry, based on the mutual inductance, the vehicle unit coil inductance, and a ground unit coil inductance, a coupling factor between the vehicle unit coil and the ground unit coil; determining, using control circuitry, based on the coupling factor, one or more power transfer direction swap parameters; receiving at the ground unit, using control circuitry, instructions to perform a power transfer direction swap; and performing, using control circuitry, based on the determined one or more power transfer direction swap parameters, the power transfer direction swap.

25. The method of paragraph 24, wherein the method further comprises steps of the method of any one of paragraphs 1 to 23.

26. A non-transitory storage media storing computer-readable instructions thereon configured, when executed by a processor, to perform a method of any one of paragraphs 1 to 25.

27. A wireless power transfer system for switching a direction of wireless power transfer, the system comprising: a ground unit comprising a wireless power transfer coil; and a vehicle unit comprising a wireless power transfer coil; the system further comprising a processor configured to: receive one or more vehicle unit coil parameters, the one or more vehicle unit coil parameters including a vehicle unit coil position relative to the ground unit coil; determine, based on the vehicle unit coil position relative to the ground unit coil position, a coupling factor between the vehicle unit coil and the ground unit coil; determine, based on the coupling factor, one or more power transfer direction swap parameters; receive instructions to perform a power transfer direction swap; and perform, based on the determined one or more power transfer direction swap parameters, the power transfer direction swap.

28. A ground unit of a wireless power transfer system for switching a direction of wireless power transfer, the ground unit comprising: a wireless power transfer coil, and a processor configured to: receive one or more vehicle unit coil parameters associated with a power transfer coil of a vehicle unit, the one or more vehicle unit coil parameters including a vehicle unit coil position relative to the ground unit coil; determine, based on the vehicle unit coil position relative to the ground unit coil position, a coupling factor between the vehicle unit coil and the ground unit coil; determine, based on the coupling factor, one or more power transfer direction swap parameters; receive instructions to perform a power transfer direction swap; and perform, based on the determined one or more power transfer direction swap parameters, the power transfer direction swap.

29. A vehicle unit of a wireless power transfer system for switching a direction of wireless power transfer, the vehicle unit comprising: a wireless power transfer coil, and a processor configured to: transmit one or more vehicle unit coil parameters of the wireless power transfer coil to a ground unit of a wireless power transfer system, the one or more vehicle unit coil parameters including a vehicle unit coil position relative to a wireless power transfer coil of the ground unit; determine, based on the vehicle unit coil position relative to the ground unit coil position, a coupling factor between the vehicle unit coil and the ground unit coil; determine, based on the coupling factor, one or more power transfer direction swap parameters; receive instructions to perform a power transfer direction swap; perform, based on the determined one or more power transfer direction swap parameters, the power transfer direction swap.

**Claims**

1. A method of switching a direction of wireless power transfer between a wireless power transfer coil of a vehicle unit and a wireless power transfer coil of a ground unit, the method comprising:

   receiving at the ground unit, using control circuitry, one or more vehicle unit coil parameters, the one or more vehicle unit coil parameters including a vehicle unit coil position relative to the ground unit coil;
   determining, using control circuitry, based on the vehicle unit coil position relative to the ground unit coil position, a coupling factor between the vehicle unit coil and the ground unit coil;
   determining, using control circuitry, based on the coupling factor, one or more power transfer direction swap parameters;
   receiving at the ground unit, using control circuitry, instructions to perform a power transfer direction swap; and
   performing, using control circuitry, based on the determined one or more power transfer direction swap parameters, the power transfer direction swap.

2. The method as claimed in claim 1, wherein the one or more vehicle unit coil parameters further comprises one or more selected from: a vehicle unit coil inductance; a vehicle unit coil quality factor; a vehicle unit coil physical characteristic; a number of vehicle unit coil turns; a vehicle unit coil core permeability; a vehicle unit coil cross-sectional area; a vehicle unit coil length; a vehicle unit coil radius.

3. The method as claimed in claim 1 or claim 2, wherein determining the coupling factor further comprises: accessing one or more ground unit coil parameters and performing the power transfer direction swap using the ground unit coil parameters; and optionally one or more selected from:

   i. wherein the one or more ground unit coil parameters defines a ground unit coil type; and

ii. wherein the one or more ground unit coil parameters comprises one or more selected from: a ground unit coil inductance; a ground unit coil quality factor; a ground unit coil physical characteristic; a number of ground unit coil turns; a ground unit coil core permeability; a ground unit coil cross-sectional area; a ground unit coil length; a ground unit coil radius.

4. The method as claimed in claim 3, wherein determining the coupling factor further comprises: calculating, based on the vehicle unit coil position and the ground unit coil position, a relative position of the vehicle unit coil and the ground unit coil, the relative positions each comprising an X-component, a Y-component, and a Z-component; and optionally one or more selected from:

i. wherein the relative positions each further comprise an angular rotation;
ii. wherein determining the coupling factor further comprises: determining, based on the relative position of the vehicle unit coil and the ground unit coil, a distance between the vehicle unit coil and the ground unit coil, the distance having a Z component; and
iii. wherein determining the coupling factor further comprises: determining, based on the relative position of the vehicle unit coil and the ground unit coil, or the distance, a mutual inductance of the vehicle unit coil and the ground unit coil; optionally,

wherein the one or more vehicle unit coil parameters further includes a vehicle unit coil inductance, and wherein determining the coupling factor further comprises: accessing a ground unit coil inductance; and calculating the coupling factor based on the mutual inductance, the vehicle unit coil inductance and the ground unit coil inductance.

5. The method as claimed in any one of claims 1 to 4, wherein the method further comprises:

detecting that the vehicle unit coil position has changed;
calculating, in response to the detection, an updated vehicle unit coil position; and
determining, based on the updated vehicle unit coil position and the ground unit coil position, an updated coupling factor between the vehicle unit coil and the ground unit coil;
wherein calculating the one or more power transfer direction swap parameters is based on the updated coupling factor.

6. The method as claimed in any one of the preceding claims, wherein performing the power transfer direction swap comprises:
reducing at least a portion of stored energy in at least one reactive component of the ground unit coil and/or the vehicle unit coil; and optionally one or more selected from:

i. wherein the one or more power transfer direction swap parameters comprise one or more selected from: a stored energy in the at least one reactive component of the ground unit coil; a stored energy in the at least one reactive component of the vehicle unit coil;
ii. wherein reducing at least a portion of the stored energy comprises:

reducing a pulse width or duty cycle of one or more ground unit coil control signals or one or more vehicle unit coil control signals; and
wherein the one or more power transfer direction swap parameters comprise one or more selected from: the pulse width of the one or more ground unit coil control signals; the duty cycle of the one or more ground unit coil control signals; the pulse width of the one or more vehicle unit coil control signals; the duty cycle of the one or more vehicle unit coil control signals;

iii. wherein reducing at least a portion of the stored energy comprises:

adjusting a resistive impedance parameter and a capacitive impedance parameter of the vehicle unit or the ground unit; and
wherein the one or more power transfer direction swap parameters comprise one or more selected from: the resistive impedance parameter of the vehicle unit; the capacitive impedance parameter of the vehicle unit; the resistive impedance parameter of the ground unit; the capacitive impedance parameter of the ground unit; and

iv. wherein reducing at least a portion of the stored energy comprises:

shorting at least one component selected from: a component of the ground unit; a component of the vehicle; and

wherein the one or more power transfer direction swap parameters comprise one or more selected from.

7. The method as claimed in any one of the preceding claims, wherein performing the power transfer direction swap comprises:

ceasing a ground unit coil current across the ground unit and a vehicle unit coil current across the vehicle unit coil; and

reestablishing the ground unit coil current and the vehicle unit coil current;

wherein following the reestablishment, the ground unit coil current and the vehicle unit coil current is configured to reach a corresponding steady state; and optionally, wherein the ground unit coil current and the vehicle unit coil current are configured to reach the steady state following a reestablishment period, wherein the reestablishment period is less than; and further optionally,

wherein during the reestablishment period, the ground unit coil current remains below a ground unit coil current threshold, and the vehicle unit coil current remains below a vehicle unit coil current threshold.

8. The method as claimed in any one of the preceding claims, wherein prior to receiving the one or more vehicle unit coil parameters, the method further comprises:

performing an initial power transfer direction swap for determining one or more calibration parameters.

9. The method as claimed in any one of the preceding claims, wherein performing the power transfer direction swap comprises: communicating at least one of the power transfer direction swap parameters to the vehicle unit to control a portion of the power direction swap performed by the vehicle unit; optionally,

wherein communicating the at least one of the power transfer direction swap parameters to the vehicle is performed using a bi-directional communication channel, the bi-directional communication channel operating on a channel frequency band different to a inductive power transfer frequency band of the power transfer.

10. A method of switching a direction of wireless power transfer between a wireless power transfer coil of a vehicle unit and a wireless power transfer coil of a ground unit, the method comprising:

receiving at the ground unit, using control circuitry, one or more vehicle unit coil parameters, the one or more vehicle unit coil parameters including a vehicle unit coil position relative to the ground unit coil, and a vehicle unit coil inductance;

determining, using control circuitry, based on the vehicle unit coil position relative to the ground unit coil, a mutual inductance between the vehicle unit coil and the ground unit coil;

determining, using control circuitry, based on the mutual inductance, the vehicle unit coil inductance, and a ground unit coil inductance, a coupling factor between the vehicle unit coil and the ground unit coil;

determining, using control circuitry, based on the coupling factor, one or more power transfer direction swap parameters;

receiving at the ground unit, using control circuitry, instructions to perform a power transfer direction swap; and performing, using control circuitry, based on the determined one or more power transfer direction swap parameters, the power transfer direction swap.

11. The method as claimed in claim 10, wherein the method further comprises steps of the method of any one of claims 1 to 9.

12. A non-transitory storage media storing computer-readable instructions thereon configured, when executed by a processor, to perform a method as claimed in any one of claims 1 to 11.

13. A wireless power transfer system for switching a direction of wireless power transfer, the system comprising:

a ground unit comprising a wireless power transfer coil; and
a vehicle unit comprising a wireless power transfer coil;
the system further comprising a processor configured to:

receive one or more vehicle unit coil parameters, the one or more vehicle unit coil parameters including a vehicle unit coil position relative to the ground unit coil;

determine, based on the vehicle unit coil position relative to the ground unit coil position, a coupling factor between the vehicle unit coil and the ground unit coil;

determine, based on the coupling factor, one or more power transfer direction swap parameters;

receive instructions to perform a power transfer direction swap; and

perform, based on the determined one or more power transfer direction swap parameters, the power transfer direction swap.

14. A ground unit of a wireless power transfer system for switching a direction of wireless power transfer, the ground unit comprising:

a wireless power transfer coil, and
a processor configured to:

receive one or more vehicle unit coil parameters associated with a power transfer coil of a vehicle unit, the one or more vehicle unit coil parameters including a vehicle unit coil position relative to the ground unit coil;

determine, based on the vehicle unit coil position relative to the ground unit coil position, a coupling factor between the vehicle unit coil and the ground unit coil;

determine, based on the coupling factor, one or more power transfer direction swap parameters;

receive instructions to perform a power transfer direction swap; and

perform, based on the determined one or more power transfer direction swap parameters, the power transfer direction swap.

15. A vehicle unit of a wireless power transfer system for switching a direction of wireless power transfer, the vehicle unit comprising:

a wireless power transfer coil, and
a processor configured to:

transmit one or more vehicle unit coil parameters of the wireless power transfer coil to a ground unit of a wireless power transfer system, the one or more vehicle unit coil parameters including a vehicle unit coil position relative to a wireless power transfer coil of the ground unit;

determine, based on the vehicle unit coil position relative to the ground unit coil position, a coupling factor between the vehicle unit coil and the ground unit coil;

determine, based on the coupling factor, one or more power transfer direction swap parameters;

receive instructions to perform a power transfer direction swap;

perform, based on the determined one or more power transfer direction swap parameters, the power transfer direction swap.

Fig. 1

EP 4 751 984 A1

# Fig. 2

EP 4 751 984 A1

# Fig. 3A

# Fig. 3B

Fig. 4

# Fig.5

EP 4 751 984 A1

# Fig. 6

602

```
Steady state
in G2V
```

604

```
Receiving vehicle unit coil
position relative to the
ground unit coil
```

```
Determining power transfer
direction swap parameters
using the coupling factor
```

608

```
Determining coupling
factor based on the
vehicle unit coil position
```

606

```
Receiving wireless power transfer
direction swap instructions
```

610

```
Determining
component
shorting
implementation
```

614

616

```
Shorting vehicle
unit components
```

618

```
Shorting ground
unit components
```

620

```
Operating of the vehicle unit
converter as an inverter
```

622

```
Operating of the vehicle unit
converter as an retifier
```

600

```
Steady state
in G2V
```
624

EP 4 751 984 A1

Fig. 7A

Fig. 7B

Fig. 7C

Fig. 7D

EP 4 751 984 A1

Fig. 7E

Fig. 7F

Fig. 7G

# Fig. 8

```
                                                              802

┌──────────────────────────────────────────────────────────┐
│   Receiving, at the ground unit, one or more vehicle unit coil │
│ parameters, the one or more vehicle unit coil parameters including │
│   a vehicle unit coil position relative to the ground unit coil │
└──────────────────────────────────────────────────────────┘

            804

┌──────────────────────────────────────────────────────────┐
│     Determining, based on the vehicle unit coil position     │
│  relative to the ground unit coil position, a coupling factor │
│   between the vehicle unit coil and the ground unit coil     │
└──────────────────────────────────────────────────────────┘

                                              806

┌──────────────────────────────────────────────────────────┐
│    Determining, based on the coupling factor, one or        │
│    more power transfer direction swap parameters            │
└──────────────────────────────────────────────────────────┘

          808

┌──────────────────────────────────────────────────────────┐
│      Receiving at the ground unit, instructions to          │
│       perform a power transfer direction swap               │
└──────────────────────────────────────────────────────────┘

                                              810

┌──────────────────────────────────────────────────────────┐
│   Performing, based on the determined one or more           │
│    power transfer direction swap parameters, the            │
│          power transfer direction swap                      │
└──────────────────────────────────────────────────────────┘

  800
```

Fig. 9A

Fig. 9B

Fig. 9C

Fig. 9D

## Fig. 10A

## Fig. 10B

## Fig. 10C

## Fig. 10D

# Fig. 11

# Fig. 12

EP 4 751 984 A1

Fig. 13

1300

1302

1306 GA

1308 TX

1320 RX

1316 VA 1318

Processing Unit

1304

1308

1310

1310 RX

1310

1318 TX

1318

1320

1312

Processing Unit

1314

EP 4 751 984 A1

Fig. 14

1400

1402

1406 GA

1408

TX/RX

1416 TX/RX

1414 VA

Processing Unit

1404

1408

Processing Unit

1410

1412

1416

Europäisches
Patentamt

European
Patent Office

Office européen
des brevets

# EUROPEAN SEARCH REPORT

Application Number

EP 24 21 6689

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/161696 A1 (COOK NIGEL P [US] ET AL) 28 June 2012 (2012-06-28) | 1-3,5-15 | INV. B60L53/12 |
| Y | * paragraphs [0052], [0068], [0114], [0162], [0205] - [0226], [0229] - [0237], [0241] - [0244]; figures 19A-23C, 24, 25 * | 4 | B60L53/122 B60L53/38 B60L53/39 B60L53/66 B60L55/00 |
| Y | ----- CN 117 183 777 A (UNIV HUNAN TECHNOLOGY) 8 December 2023 (2023-12-08) * paragraphs [0054] - [0059], [0071] - [0106]; figures 1-6; tables 1-4 * | 4 | H02J50/12 H02J50/80 H02J50/90 B60L53/62 |
| A | ----- US 2019/006885 A1 (DANILOVIC MILISAV [US]) 3 January 2019 (2019-01-03) * paragraphs [0150] - [0171]; figures 16, 17 * | 1-15 | |
| A | ----- TANG YUNYU ET AL: "A New Controller for Bidirectional Wireless Power Transfer Systems", IEEE TRANSACTIONS ON POWER ELECTRONICS, INSTITUTE OF ELECTRICAL AND ELECTRONICS ENGINEERS, USA, vol. 33, no. 10, 1 October 2018 (2018-10-01), pages 9076-9087, XP011687291, ISSN: 0885-8993, DOI: 10.1109/TPEL.2017.2785365 [retrieved on 2018-07-17] * the whole document * ----- | 1-15 | |

**TECHNICAL FIELDS SEARCHED (IPC)**

B60L
H02J

The present search report has been drawn up for all claims

| Place of search | Date of completion of the search | Examiner |
|---|---|---|
| The Hague | 16 May 2025 | Bronski, Bartlomiej |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 21 6689

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2025

| Patent document cited in search report | | | Publication date | Patent family member(s) | | Publication date |
|---|---|---|---|---|---|---|
| US 2012161696 | A1 | | 28-06-2012 | CN | 103249592 A | 14-08-2013 |
| | | | | EP | 2632762 A1 | 04-09-2013 |
| | | | | JP | 5632089 B2 | 26-11-2014 |
| | | | | JP | 2013546293 A | 26-12-2013 |
| | | | | KR | 20130121850 A | 06-11-2013 |
| | | | | US | 2012161696 A1 | 28-06-2012 |
| | | | | WO | 2012058466 A1 | 03-05-2012 |
| CN 117183777 | A | | 08-12-2023 | NONE | | |
| US 2019006885 | A1 | | 03-01-2019 | CN | 111108662 A | 05-05-2020 |
| | | | | EP | 3646434 A1 | 06-05-2020 |
| | | | | US | 2019006836 A1 | 03-01-2019 |
| | | | | US | 2019006885 A1 | 03-01-2019 |
| | | | | US | 2021296933 A1 | 23-09-2021 |
| | | | | US | 2021296934 A1 | 23-09-2021 |
| | | | | WO | 2019006376 A1 | 03-01-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9561730 B2
- US 48683023
- US 11394253 B
- US 9971353 B
- US 10343537 B

**Non-patent literature cited in the description**

- Appendix C.  Standard J2954